# EUROPEAN PATENT SPECIFICATION

(11) **EP 3 163 812 B1**
(45) Date of publication and mention of the grant of the patent: **24.10.2018**
(21) Application number: 14897820.8
(22) Date of filing: 18.07.2014
(51) Int. Cl.: H04L 12/723, H04L 12/715

(54) **METHOD AND APPARATUS FOR CROSS-LAYER PATH ESTABLISHMENT**
VERFAHREN UND VORRICHTUNG ZUR SCHICHTÜBERKREUZENDEN WEGHERSTELLUNG
PROCÉDÉ ET APPAREIL D'ÉTABLISSEMENT DE CHEMIN INTER-COUCHES

(43) Date of publication of application: 03.05.2017
(73) Proprietor: HUAWEI TECHNOLOGIES CO., LTD., Shenzhen Guangdong 518129 (CN)
(72) Inventor: ZHANG, Xian, Shenzhen Guangdong 518129 (CN)
(74) Representative: Körber, Martin Hans
(86) International application number: PCT/CN2014/082520
(87) International publication number: WO 2016/008156

(56) References cited:
- WO-A1-2008/046322
- WO-A1-2013/149675
- CN-A- 102 065 006
- CN-A- 103 188 150
- CN-A- 103 688 497
- US-A1- 2012 093 030
- US-A1- 2012 195 229

## Description

### TECHNICAL FIELD

The present invention relates to the communications field, and in particular, to a cross-layer path establishment method and apparatus.

### BACKGROUND

To resolve a complex path computation problem on an automatically switched optical network (Automatically Switched Optical Network, ASON), the Internet Engineering Task Force (Internet Engineering Task Force, IETF) puts forward a path computation element (Path Computation Element, PCE). The PCE is a new functional entity that is on a network and that is dedicated for path computation, and the PCE may be integrated in a network element, or may be an independent device.

In general cases, one PCE may be configured for each network, for example, one PCE is separately configured for an Internet Protocol (Internet Protocol, IP) network and an optical network (Optical Network). The PCE on the IP network (IP-layer PCE for short) is responsible for path computation of the IP network, and the PCE on the optical network (optical-layer PCE for short) is responsible for path computation of the optical network.

In the prior art, an IP over optical network (IP over Optical) is put forward. On the IP over Optical network, an IP-layer PCE first attempts to compute a path from an IP-layer first node to an IP-layer last node and that meets a path bandwidth requirement. If the IP-layer PCE cannot compute a to-be-established path that meets the foregoing requirement, the IP-layer PCE may request an optical-layer PCE to compute an optical-layer path that can be used as a bottom-layer path of the required to-be-established path, and the IP-layer PCE combines the bottom-layer path and information about the IP layer, to obtain a complete path from the_IP-layer first node to the IP-layer last node and that meets the foregoing requirement. The IP-layer first node uses a signaling protocol to carry information about this complete path, and completes establishment of the path that crosses the IP layer and the optical layer.

In a process of establishing the path that crosses the IP layer and the optical layer, a delay exists in a process from computing the bottom-layer path by the optical-layer PCE to completing establishing the complete path by the IP-layer first node. Therefore, when the IP-layer first node establishes the complete path, the bottom-layer path, computed by the optical-layer PCE, of the to-be-established path may already be occupied by another service or have inadequate bandwidth, which may cause a problem that the to-be-established path cannot be established successfully subsequently or the to-be-established path that is established cannot meet the bandwidth requirement.

The international patent application WO2013/149675 A1 discloses the computation of end-to-end paths through a network comprising a plurality of network domains. A path segment within a network domain is computed using a child path computation element PCE associated with the network domain. An end-to-end path across a plurality of network domains is computed using a parent PCE in conjunction with the plurality of child PCEs associated with the respective plurality of network domains. The child PCE computes a local path identifier and a parent PCE computes a global path identifier. A label switch path is established within the domain for routing the traffic signal using the local path identifier and the global path identifier.

### SUMMARY

Embodiments of the present invention provide a cross-layer path establishment method and apparatus, to resolve a problem in the prior art that a to-be-established path cannot be established successfully or a to-be-established path that is established cannot meet a bandwidth requirement.

A first aspect of the embodiments of the present invention provides a cross-layer path establishment method, including:
determining, by an upper-layer path computation element PCE, upper-layer path information of a to-be-established LSP, an identifier of a first node of a lower-layer path, and an identifier of a last node of the lower-layer path according to an identifier of an upper-layer first node, an identifier of an upper-layer last node, and a bandwidth requirement of the to-be-established label switched path LSP, where the upper-layer path information includes an identifier of an upper-layer node that the to-be-established LSP passes through, and the lower-layer path is used as a bottom-layer path of the to-be-established LSP, to carry upper-layer service data;
acquiring an identifier of an established lower-layer path that matches the identifier of the first node of the lower-layer path, the identifier of the last node of the lower-layer path, and the bandwidth requirement; and
sending, to the upper-layer first node, a path establishment indication that includes the upper-layer path information and the identifier of the lower-layer path, so that the upper-layer first node establishes the to-be-established LSP according to the upper-layer path information and the identifier of the lower-layer path.

With reference to the first aspect, in a possible implementation manner, the acquiring an identifier of an established lower-layer path that matches the identifier of the first node of the lower-layer path, the identifier of the last node of the lower-layer path, and the bandwidth requirement includes:
sending a path establishment message to a lower-layer PCE, where the path establishment message includes the identifier of the first node of the lower-layer path, the identifier of the last node of the lower-layer path, and the bandwidth requirement; and
receiving a path indication message from the lower-layer PCE, where the path indication message includes the identifier of the established lower-layer path that matches the identifier of the first node of the lower-layer path, the identifier of the last node of the lower-layer path, and the bandwidth requirement.

With reference to the first aspect and the foregoing possible implementation manner, in another possible implementation manner, before the acquiring an identifier of an established lower-layer path that matches the identifier of the first node of the lower-layer path, the identifier of the last node of the lower-layer path, and the bandwidth requirement, the method further includes:
receiving first connection information from a lower-layer PCE, where the first connection information includes planning information of a planned lower-layer path on a network on which the lower-layer PCE is located, where the planned lower-layer path includes: the established lower-layer path and a lower-layer path that has been planned but not yet established; and
the planning information includes at least the identifier of the lower-layer path, the identifier of the first node of the lower-layer path, the identifier of the last node of the lower-layer path, and bandwidth information of the lower-layer path.

With reference to the first aspect and the foregoing possible implementation manner, in another possible implementation manner, the acquiring an identifier of an established lower-layer path that matches the identifier of the first node of the lower-layer path, the identifier of the last node of the lower-layer path, and the bandwidth requirement includes:
acquiring an identifier, which is in the first connection information, of a lower-layer path that matches the identifier of the first node of the lower-layer path, the identifier of the last node of the lower-layer path, and the bandwidth requirement;
sending a path establishment message to the lower-layer PCE, where the path establishment message includes the acquired identifier of the lower-layer path; and
receiving a path indication message from the lower-layer PCE, where the path indication message includes an identifier of an established lower-layer path that matches the acquired identifier of the lower-layer path. With reference to the first aspect and the foregoing possible implementation manner, in another possible implementation manner, the planning information further includes: status information of the lower-layer path, where the status information of the lower-layer path is used to indicate that the lower-layer path has been established or the lower-layer path has been planned but not yet established.

A third aspect of the embodiments of the present invention further provides a cross-layer path establishment method, including:
receiving, by a lower-layer path computation element PCE, a path establishment message from an upper-layer PCE, where the path establishment message is used to instruct a lower-layer first node to establish a lower-layer path that is used as a bottom-layer path of a to-be-established label switched path LSP, to carry upper-layer service data; and the path establishment message includes: an identifier of the lower-layer path; and
if a lower-layer path that matches the identifier, which is in the path establishment message, of the lower-layer path has been established, sending, to the upper-layer PCE, a path indication message that includes an identifier of the established lower-layer path, so that the upper-layer PCE sends, to an upper-layer first node, a path establishment indication that includes the identifier, which is in the path indication message, of the established lower-layer path, and the upper-layer first node establishes the to-be-established LSP; or
if a lower-layer path that matches the identifier, which is in the path establishment message, of the lower-layer path has not been established, establishing the lower-layer path that matches the identifier of the lower-layer path, and sending, to the upper-layer PCE, a path indication message that includes an identifier of the established lower-layer path, so that the upper-layer PCE sends, to an upper-layer first node, a path establishment indication that includes the identifier, which is in the path indication message, of the established lower-layer path, and the upper-layer first node establishes the to-be-established LSP.

With reference to the third aspect, in a possible implementation manner, before the receiving, by a lower-layer PCE, a path establishment message from an upper-layer PCE, the method further includes:
sending first connection information to the upper-layer PCE, where the first connection information includes planning information of a planned lower-layer path on a network on which the lower-layer PCE is located, where the planned lower-layer path includes: the established lower-layer path and a lower-layer path that has been planned but not yet established, where
the planning information includes at least an identifier of the planned lower-layer path, an identifier of a first node of the lower-layer path, an identifier of a last node of the lower-layer path, and bandwidth information of the lower-layer path.

With reference to the third aspect and the foregoing possible implementation manner, in another possible implementation manner, the planning information further includes: status information of the lower-layer path, where the status information of the lower-layer path is used to indicate that the lower-layer path has been established or the lower-layer path has been planned but not yet established.

With reference to the third aspect and the foregoing possible implementation manner, in another possible implementation manner, the method further includes:
sending second connection information to the upper-layer PCE, where the second connection information includes at least an identifier of a lower-layer path whose status information changes, and status update information of the lower-layer path whose status information changes, where the status update information is used for updating, by the upper-layer PCE according to the identifier of the lower-layer path whose status information changes, the status information of the lower-layer path whose status information changes.

A fourth aspect of the embodiments of the present invention further provides a path computation element PCE, including:
a determining unit, configured to determine upper-layer path information of a to-be-established LSP, an identifier of a first node of a lower-layer path, and an identifier of a last node of the lower-layer path according to an identifier of an upper-layer first node, an identifier of an upper-layer last node, and a bandwidth requirement of the to-be-established label switched path LSP, where the upper-layer path information includes an identifier of an identifier of an upper-layer node that the to-be-established LSP passes through, and the lower-layer path is used as a bottom-layer path of the to-be-established LSP, to carry upper-layer service data;
an acquiring unit, configured to acquire an identifier of an established lower-layer path that matches the identifier of the first node of the lower-layer path and the identifier of the last node of the lower-layer path that are determined by the determining unit, and the bandwidth requirement; and
a sending unit, configured to send, to the upper-layer first node, a path establishment indication that includes the upper-layer path information and the identifier of the lower-layer path that are acquired by the acquiring unit, so that the upper-layer first node establishes the to-be-established LSP according to the upper-layer path information and the identifier of the lower-layer path.

With reference to the fourth aspect, in a possible implementation manner, the acquiring unit includes:
a first sending subunit, configured to send a path establishment message to a lower-layer PCE, where the path establishment message includes the identifier of the first node of the lower-layer path and the identifier of the last node of the lower-layer path that are determined by the determining unit, and the bandwidth requirement; and
a first receiving subunit, configured to receive a path indication message from the lower-layer PCE, where the path indication message includes the identifier of the established lower-layer path that matches the identifier of the first node of the lower-layer path, the identifier of the last node of the lower-layer path, and the bandwidth requirement that are in the path establishment message sent by the first sending subunit.

With reference to the fourth aspect and the foregoing possible implementation manner, in another possible implementation manner, this PCE further includes:
a receiving unit, configured to: before the acquiring unit acquires the identifier of the established lower-layer path that matches the identifier of the first node of the lower-layer path, the identifier of the last node of the lower-layer path, and the bandwidth requirement, receive first connection information from a lower-layer PCE, where the first connection information includes planning information of a planned lower-layer path on a network on which the lower-layer PCE is located, where the planned lower-layer path includes: the established lower-layer path and a lower-layer path that has been planned but not yet established, where
the planning information includes at least the identifier of the lower-layer path, the identifier of the first node of the lower-layer path, the identifier of the last node of the lower-layer path, and bandwidth information of the lower-layer path.

With reference to the fourth aspect and the foregoing possible implementation manner, in another possible implementation manner, the acquiring unit includes:
a first acquiring subunit, configured to acquire an identifier, which is in the first connection information received by the receiving unit, of a lower-layer path that matches the identifier of the first node of the lower-layer path, the identifier of the last node of the lower-layer path, and the bandwidth requirement;
a second sending subunit, configured to send a path establishment message to the lower-layer PCE, where the path establishment message includes the identifier, which is acquired by the first acquiring subunit, of the lower-layer path; and
a second receiving subunit, configured to receive a path indication message from the lower-layer PCE, where the path indication message includes an identifier of an established lower-layer path that corresponds to the identifier, which is acquired by the first acquiring subunit, of the lower-layer path.

A sixth aspect of the embodiments of the present invention further provides a path computation element PCE, including:
a receiving unit, configured to receive a path establishment message from an upper-layer PCE, where the path establishment message is used to instruct a lower-layer first node to establish a lower-layer path that is used as a bottom-layer path of a to-be-established label switched path LSP, to carry upper-layer service data; and the path establishment message includes: an identifier of the lower-layer path;
an establishment unit, configured to: if a lower-layer path that matches the identifier, which is in the path establishment message received by the receiving unit, of the lower-layer path has not been established, establish the lower-layer path that matches the identifier of the lower-layer path; and
a sending unit, configured to send, to the upper-layer PCE, a path indication message that includes an identifier of the lower-layer path established by the establishment unit; or if a lower-layer path that matches the identifier, which is in the path establishment message received by the receiving unit, of the lower-layer path has been established, send, to the upper-layer PCE, a path indication message that includes an identifier of the established lower-layer path, so that the upper-layer PCE sends, to an upper-layer first node, a path establishment indication that includes the identifier, which is in the path indication message, of the established lower-layer path, and the upper-layer first node establishes the to-be-established LSP.

With reference to the sixth aspect, in a possible implementation manner, the sending unit is further configured to: before the receiving unit receives the path establishment message from the upper-layer PCE, send first connection information to the upper-layer PCE, where the first connection information includes planning information of a planned lower-layer path on a network on which this PCE is located, where the planned lower-layer path includes: the established lower-layer path and a lower-layer path that has been planned but not yet established, where
the planning information includes at least an identifier of the planned lower-layer path, an identifier of a first node of the lower-layer path, an identifier of a last node of the lower-layer path, and bandwidth information of the lower-layer path.

With reference to the sixth aspect and the foregoing possible implementation manner, in another possible implementation manner, the planning information further includes: status information of the lower-layer path, where the status information of the lower-layer path is used to indicate that the lower-layer path has been established or the lower-layer path has been planned but not yet established.

Compared with the prior art in which there is a problem that a bottom-layer path may already be occupied by another service or has inadequate bandwidth due to a delay in a process from computing a path by a lower-layer PCE to completing establishment of a path crossing an upper layer and a lower layer, which further leads to a subsequent unsuccessful path establishment or causes the established path to fail to meet a bandwidth requirement, in the solution of the cross-layer path establishment method and apparatus that are provided in the embodiments of the present invention, a lower-layer path acquired by an upper-layer PCE is an established bottom-layer path that is used to carry upper-layer service data, and when establishing a complete path subsequently, an upper-layer first node no longer needs to establish a bottom-layer path, and therefore a case in which the bottom-layer path is occupied by another service does not occur; the lower-layer path acquired by an upper layer is a path that meets a bandwidth requirement, and therefore a case of inadequate bandwidth does not occur; and in this way, a path establishment success rate of the upper-layer first node can be increased.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a cross-layer path establishment method according to Embodiment 1;
FIG. 2 is a schematic diagram of a to-be-established LSP according to Embodiment 1;
FIG. 3 is a flowchart of a cross-layer path establishment method according to Embodiment 2;
FIG. 4 is a flowchart of a cross-layer path establishment method according to Embodiment 3;
FIG. 5 is a flowchart of a cross-layer path establishment method according to Embodiment 4;
FIG. 6 is a flowchart of another cross-layer path establishment method according to Embodiment 4;
FIG. 7 is a flowchart of another cross-layer path establishment method according to Embodiment 4;
FIG. 8 is a schematic composition diagram of a PCE according to Embodiment 5;
FIG. 9 is a schematic composition diagram of another PCE according to Embodiment 5;
FIG. 10 is a schematic composition diagram of another PCE according to Embodiment 5;
FIG. 11 is a schematic composition diagram of another PCE according to Embodiment 5;
FIG. 12 is a schematic composition diagram of another PCE according to Embodiment 5;
FIG. 13 is a schematic composition diagram of another PCE according to Embodiment 5;
FIG. 14 is a schematic composition diagram of a PCE according to Embodiment 6 or Embodiment 7;
FIG. 15 is a schematic composition diagram of another PCE according to Embodiment 7;
FIG. 16 is a schematic composition diagram of a PCE according to Embodiment 8;
FIG. 17 is a schematic composition diagram of another PCE according to Embodiment 8; and
FIG. 18 is a schematic composition diagram of a PCE according to Embodiment 9 or Embodiment 10.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

To easily understand the embodiments of the present invention, some terms used in description of the embodiments of the present invention are first described herein.

Multiprotocol label switching (MPLS) is a system that is used for quick data packet exchanging and routing, and provides network data traffic with a target, a routing address, and capabilities such as forwarding and exchanging. More particularly, the multiprotocol label switching has a mechanism for managing various forms of communication flows. The MPLS provides a manner in which an Internet protocol (Internet Protocol, IP) address is mapped to a simple label that has a fixed length, to be used in different packet forwarding and packet exchanging technologies. In the MPLS, data transmission occurs on a label switched path (Label Switched Path, LSP). The LSP is a path, represented by using a label sequence, from a first node to a last node.

A routing protocol such as the Open Shortest Path First (Open Shortest Path First, OSPF) protocol is used for node interaction, to implement releasing network information on the entire network and distributed path computation.

A signaling protocol such as the Resource Reservation Protocol (Resource Reservation Protocol, RSVP) or the Resource Reservation Protocol-Traffic Engineering (Resource Reservation Protocol-Traffic Engineering, RSVP-TE) is used to implement, in a distributed manner, a function of establishing a path (that is, to implement, by exchanging node information hop by hop, a path from a source to a destination).

Exemplarily, when data transmission between IP nodes on an IP network is performed by using an optical network (Optical Network), an upper-layer path computation element (Path Computation Element, PCE) in the embodiments of the present invention may be an IP-layer PCE, and a lower-layer PCE is an optical-layer PCE. When data transmission between IP nodes on an IP network is performed by using the Ethernet (Ethernet), an upper-layer PCE in the embodiments of the present invention may be an IP-layer PCE, and a lower-layer PCE is an Ethernet PCE. When data transmission between nodes on the Ethernet is performed by using an optical network, an upper-layer PCE in the embodiments of the present invention may be an Ethernet PCE, and a lower-layer PCE is an optical-layer PCE. Certainly, the embodiments of the present invention may also be applied to a process of establishing a path that crosses other two networks, and an upper-layer PCE and a lower-layer PCE are not specifically limited in the embodiments of the present invention.

It should be noted that, when an upper-layer first node needs to establish an LSP from the upper-layer first node to an upper-layer last node, if an upper-layer PCE can compute a path from the upper-layer first node to the upper-layer last node and that meets a bandwidth requirement of the to-be-established LSP, the upper-layer first node may establish the to-be-established LSP according to the path computed by the upper-layer PCE. If the upper-layer PCE cannot compute a path from the upper-layer first node to the upper-layer last node and that meets a bandwidth requirement of the to-be-established LSP, a lower-layer path needs to be established at a lower layer to serve as a bottom-layer path of the to-be-established LSP, to carry upper-layer service data, and then the upper-layer first node may establish, by combining an upper-layer node and the bottom-layer path established at the lower layer, a path that crosses the upper layer and the lower layer and that meets the first and last nodes and a bandwidth requirement of the to-be-established LSP. The embodiments of the present invention are applied to a scenario in which an upper-layer PCE cannot compute a path from an upper-layer first node to an upper-layer last node, that passes through only upper-layer nodes, and that meets a bandwidth requirement of a to-be-established LSP.

### Embodiment 1

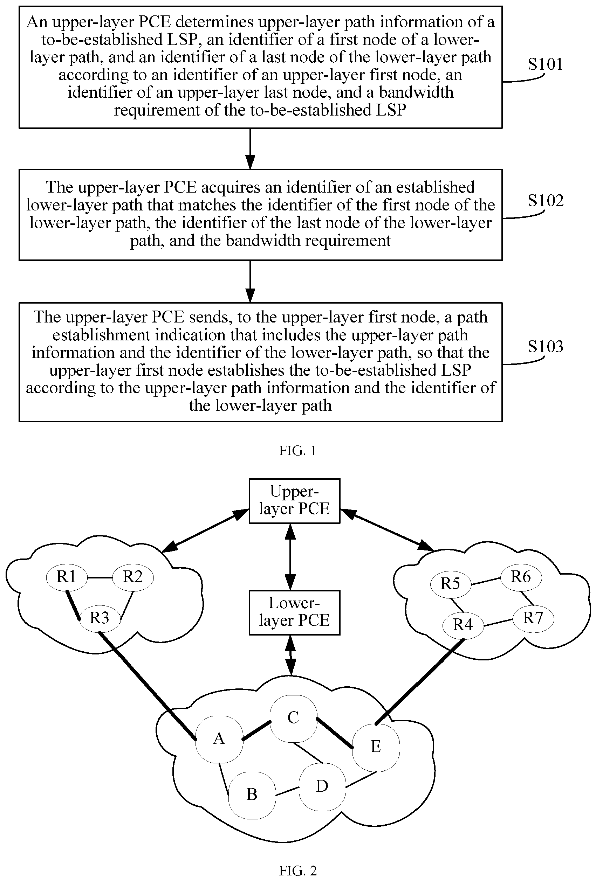

This embodiment of the present invention provides a cross-layer path establishment method. As shown in FIG. 1, the method includes:
S101: An upper-layer PCE determines upper-layer path information of a to-be-established LSP, an identifier of a first node of a lower-layer path, and an identifier of a last node of the lower-layer path according to an identifier of an upper-layer first node, an identifier of an upper-layer last node, and a bandwidth requirement of the to-be-established LSP.

The upper-layer path information includes an identifier of an upper-layer node that the to-be-established LSP passes through. As a bottom-layer path of the to-be-established LSP, the lower-layer path is used to carry upper-layer service data. The bandwidth requirement is used to represent a bandwidth requirement of an upper-layer service.

It should be noted that, the to-be-established LSP is an LSP that is going to be established by the upper-layer first node (which is a start node of the to-be-established LSP), from the upper-layer first node to the upper-layer last node (which is an end node of the to-be-established LSP), and that meets the bandwidth requirement. If the upper-layer PCE cannot compute a path from the upper-layer first node to the upper-layer last node and that meets the bandwidth requirement of the to-be-established LSP, a lower-layer path needs to be established at a lower layer to serve as a bottom-layer path of the to-be-established LSP, to carry upper-layer service data. The upper-layer PCE needs to determine the upper-layer path information, the identifier of the first node of the lower-layer path, and the identifier of the last node of the lower-layer path. The identifier of the first node of the lower-layer path is used to indicate a start node of the bottom-layer path of the to-be-established LSP, and the identifier of the last node of the lower-layer path is used to indicate an end node of the bottom-layer path of the to-be-established LSP.

For example, it is assumed that, an upper-layer node R1 needs to establish an LSP from the upper-layer first node R1 to an upper-layer last node R5, as shown in FIG. 2. If an upper-layer PCE cannot compute a path from R1 to R5 and that meets a bandwidth requirement, a lower-layer path needs to be established at a lower layer to serve as a bottom-layer path of the to-be-established LSP. For an upper-layer path R1-R3 determined by the upper-layer PCE, R3 is connected to a lower-layer node A, and in this case, A is a first node of the lower-layer path; for an upper-layer path R4-R5 determined by the upper-layer PCE, R4 is connected to a lower-layer node E, and-in this case, E is a last node of the lower-layer path.

S102: The upper-layer PCE acquires an identifier of an established lower-layer path that matches the identifier of the first node of the lower-layer path, the identifier of the last node of the lower-layer path, and the bandwidth requirement.

Matching the bandwidth requirement includes: Bandwidth of the lower-layer path is equal to or greater than the bandwidth requirement of the to-be-established LSP.

The established lower-layer path includes: a planned lower-layer path that is already established; or a planned but not yet established lower-layer path that is established by the lower-layer first node after computation by the lower-layer PCE. During establishment of a complete LSP subsequently, because the lower-layer path is already established successfully, the lower-layer path may be directly used as the bottom-layer path of the to-be-established LSP.

As shown in FIG. 2, the established lower-layer path that is acquired by the upper-layer PCE and that matches the identifier of the first node of the lower-layer path, the identifier of the last node of the lower-layer path, and the bandwidth requirement is A-C-E.

In this embodiment of the present invention, a process in which the upper-layer PCE acquires the identifier of the established lower-layer path that matches the identifier of the first node of the lower-layer path, the identifier of the last node of the lower-layer path, and the bandwidth requirement may have three situations.

First situation: The lower-layer PCE sends first connection information to the upper-layer PCE, where the first connection information includes planning information of a planned lower-layer path on a network on which the lower-layer PCE is located; the upper-layer PCE acquires, according to the first connection information, an identifier of a path that meets the identifiers of the first and last nodes of the lower-layer path and the bandwidth requirement, and sends the identifier to the lower-layer PCE; and the lower-layer PCE determines, according to the received identifier, an identifier of an established lower-layer path that is indicated by the received identifier, and sends, to the upper-layer PCE, the identifier of the established lower-layer path.

Second situation: The lower-layer PCE sends first connection information to the upper-layer PCE, and on the basis of the foregoing planning information, the planning information further includes status information that is used to indicate whether the lower-layer path has been established; and the upper-layer PCE may determine, according to the received first connection information, the identifier of the established lower-layer path that meets the identifiers of the first and last nodes of the lower-layer path and the bandwidth requirement.

Third situation: The upper-layer PCE directly sends the identifier of the first node of the lower-layer path, the identifier of the last node of the lower-layer path, and the bandwidth requirement to the lower-layer PCE; and the lower-layer PCE sends, according to the foregoing requirement, the identifier of the established lower-layer path that meets the foregoing requirement to the upper-layer PCE.

For specific descriptions of the foregoing three situations, reference may be made to a related description in another embodiment of the present invention, and details are not described herein again in this embodiment of the present invention.

SI03: The upper-layer PCE sends, to the upper-layer first node, a path establishment indication that includes the upper-layer path information and the identifier of the lower-layer path, so that the upper-layer first node establishes the to-be-established LSP according to the upper-layer path information and the identifier of the lower-layer path. The identifier of the lower-layer path is used to indicate the established lower-layer path that is acquired in S102 by the upper-layer PCE and that matches the identifiers of the first and last nodes of the bottom-layer path of the to-be-established LSP and the bandwidth requirement of the to-be-established LSP.

When the upper-layer first node establishes the to-be-established LSP, the lower-layer path of the to-be-established LSP is already established successfully, and therefore the upper-layer first node may directly use the lower-layer path as the bottom-layer path of the to-be-established LSP, and does not need to establish the lower-layer path again, thereby reducing a delay.

Compared with the prior art in which there is a problem that a bottom-layer path may already be occupied by another service or has inadequate bandwidth due to a delay in a process from computing a path by a lower-layer PCE to completing establishment of a path crossing an upper layer and a lower layer, which further leads to a subsequent unsuccessful path establishment or causes the established path to fail to meet a bandwidth requirement, in the solution of the cross-layer path establishment method provided in this embodiment of the present invention, a lower-layer path acquired by an upper-layer PCE is an established bottom-layer path that is used to carry upper-layer service data, and when establishing a complete path subsequently, an upper-layer first node no longer needs to establish a bottom-layer path, and therefore a case in which the bottom-layer path is occupied by another service does not occur; the lower-layer path acquired by an upper layer is a path that meets a bandwidth requirement, and therefore a case of inadequate bandwidth does not occur; and in this way, a path establishment success rate of the

### Embodiment 2

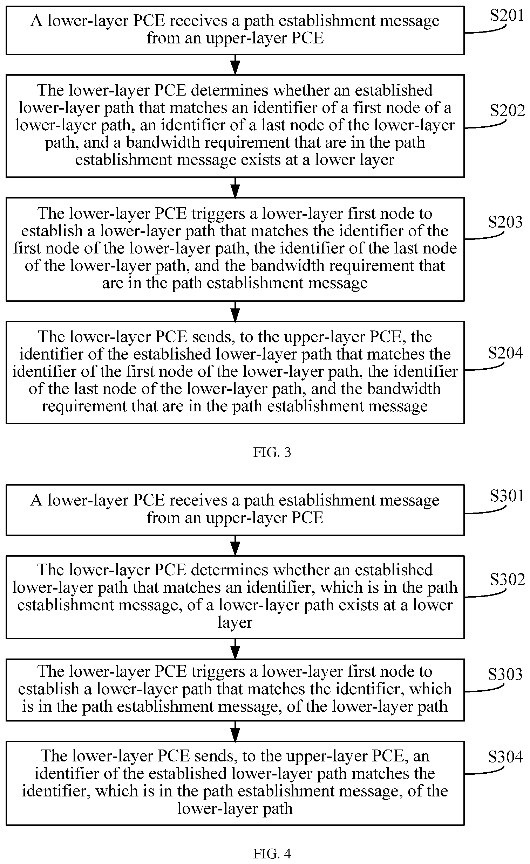

This embodiment provides a cross-layer path establishment method. As shown in FIG. 3, the method includes: S201: A lower-layer PCE receives a path establishment message from an upper-layer PCE.

The path establishment message is used to instruct a lower-layer first node to establish a lower-layer path that is used as a bottom-layer path of a to-be-established LSP, to carry upper-layer service data. The path establishment message may include: an identifier of a first node of the lower-layer path, an identifier of a last node of the lower-layer path, and a bandwidth requirement.

The first node of the lower-layer path is a start node of the bottom-layer path of the to-be-established LSP, and the last node of the lower-layer path is an end node of the bottom-layer path of the to-be-established LSP.

S202: The lower-layer PCE determines whether an established lower-layer path that matches an identifier of a first node of a lower-layer path, an identifier of a last node of the lower-layer path, and a bandwidth requirement that are in the path establishment message exists at a lower layer.

If the established lower-layer path that matches the identifier of the first node of the lower-layer path, the identifier of the last node of the lower-layer path, and the bandwidth requirement that are in the path establishment message does not exist at the lower layer, S203 is performed first, and then S204 is performed; or if the established lower-layer path that matches the identifier of the first node of the lower-layer path, the identifier of the last node of the lower-layer path, and the bandwidth requirement that are in the path establishment message exists at the lower layer, S204 is directly performed.

S203: The lower-layer PCE triggers a lower-layer first node to establish a lower-layer path that matches the identifier of the first node of the lower-layer path, the identifier of the last node of the lower-layer path, and the bandwidth requirement that are in the path establishment message.

For a method for establishing, by the lower-layer first node, the lower-layer path of the to-be-established LSP, reference may be made to a path establishment method in the prior art.

S204: The lower-layer PCE sends, to the upper-layer PCE, an identifier of the established lower-layer path that matches the identifier of the first node of the lower-layer path, the identifier of the last node of the lower-layer path, and the bandwidth requirement that are in the path establishment message.

The lower-layer PCE sends, to the upper-layer PCE, the identifier of the established lower-layer path that matches the identifier of the first node of the lower-layer path, the identifier of the last node of the lower-layer path, and the bandwidth requirement that are in the path establishment message, to indicate that the bottom-layer path is already established and can be used to carry the upper-layer service data. In this case, the upper-layer PCE may send, to an upper-layer first node, a path establishment indication that includes the identifier of the lower-layer path, so that the upper-layer first node establishes a path that crosses an upper layer and the lower layer and that meets the first and last nodes and the bandwidth requirement of the to-be-established LSP.

Compared with the prior art in which there is a problem that a bottom-layer path may already be occupied by another service or has inadequate bandwidth due to a delay in a process from computing a path by a lower-layer PCE to completing establishment of a path crossing an upper layer and a lower layer, which further leads to a subsequent unsuccessful path establishment or causes the established path to fail to meet a bandwidth requirement, in the solution of the cross-layer path establishment method provided in this embodiment, after receiving a path establishment message from an upper-layer PCE, a lower-layer PCE may send, to the upper-layer PCE, a path indication message that includes an identifier of an established lower-layer path. Because a lower-layer path indicated by the identifier, which is received by the upper-layer PCE, of the lower-layer path is an established bottom-layer path that is used to carry upper-layer service data, when establishing a complete path subsequently, an upper-layer first node no longer needs to establish a bottom-layer path, and therefore a case in which the bottom-layer path is occupied by another service does not occur; the lower-layer path acquired by an upper layer is a path that meets a bandwidth requirement, and therefore a case of inadequate bandwidth does not occur; and in this way, a path establishment success rate of the upper-layer first node can be increased.

### Embodiment 3

This embodiment of the present invention provides a cross-layer path establishment method. As shown in FIG. 4, the method includes:
S301: A lower-layer PCE receives a path establishment message from an upper-layer PCE.

The path establishment message is used to instruct a lower-layer first node to establish a lower-layer path that is used as a bottom-layer path of a to-be-established LSP, to carry upper-layer service data. The path establishment message may include: an identifier of the lower-layer path.

S302: The lower-layer PCE determines whether an established lower-layer path that matches an identifier, which is in the path establishment message, of a lower-layer path exists at a lower layer.

If the established lower-layer path that matches the identifier, which is in the path establishment message, of the lower-layer path does not exist at the lower layer, S303 is performed first, and then S304 is performed; or if the established lower-layer path that matches the identifier, which is in the path establishment message, of the lower-layer path exists at the lower layer, S304 is directly performed.

S303: The lower-layer PCE triggers a lower-layer first node to establish a lower-layer path that matches the identifier, which is in the path establishment message, of the lower-layer path.

For a method for establishing, by the lower-layer first node, the lower-layer path of the to-be-established LSP, reference may be made to a path establishment method in the prior art.

S304: The-lower-layer PCE-sends, to the upper-layer PCE, an identifier of the-established lower-layer path that-matches the identifier, which is in the path establishment message, of the lower-layer path.

The lower-layer PCE sends, to the upper-layer PCE, the identifier of the established lower-layer path that matches the identifier, which is in the path establishment message, of the lower-layer path, indicating that the bottom-layer path is already established and can be used to carry the upper-layer service data. In this case, the upper-layer PCE may send, to an upper-layer first node, a path establishment indication that includes the identifier of the lower-layer path, so that the upper-layer first node establishes a path that crosses an upper layer and the lower layer and that meets the first and last nodes and the bandwidth requirement of the to-be-established LSP.

Compared with the prior art in which there is a problem that a bottom-layer path may already be occupied by another service or has inadequate bandwidth due to a delay in a process from computing a path by a lower-layer PCE to completing establishment of a path crossing an upper layer and a lower layer, which further leads to a subsequent unsuccessful path establishment or causes the established path to fail to meet a bandwidth requirement, in the solution of the cross-layer path establishment method provided in this embodiment of the present invention, after receiving a path establishment message from an upper-layer PCE, a lower-layer PCE may send, to the upper-layer PCE, a path indication message that includes an identifier of an established lower-layer path. Because a lower-layer path indicated by the identifier, which is received by the upper-layer PCE, of the lower-layer path is an established bottom-layer path that is used to carry upper-layer service data, when establishing a complete path subsequently, an upper-layer first node no longer needs to establish a bottom-layer path, and therefore a case in which the bottom-layer path is occupied by another service does not occur; the lower-layer path acquired by an upper layer is a path that meets a bandwidth requirement, and therefore a case of inadequate bandwidth does not occur; and in this way, a path establishment success rate of the upper-layer first node can be increased.

### Embodiment 4

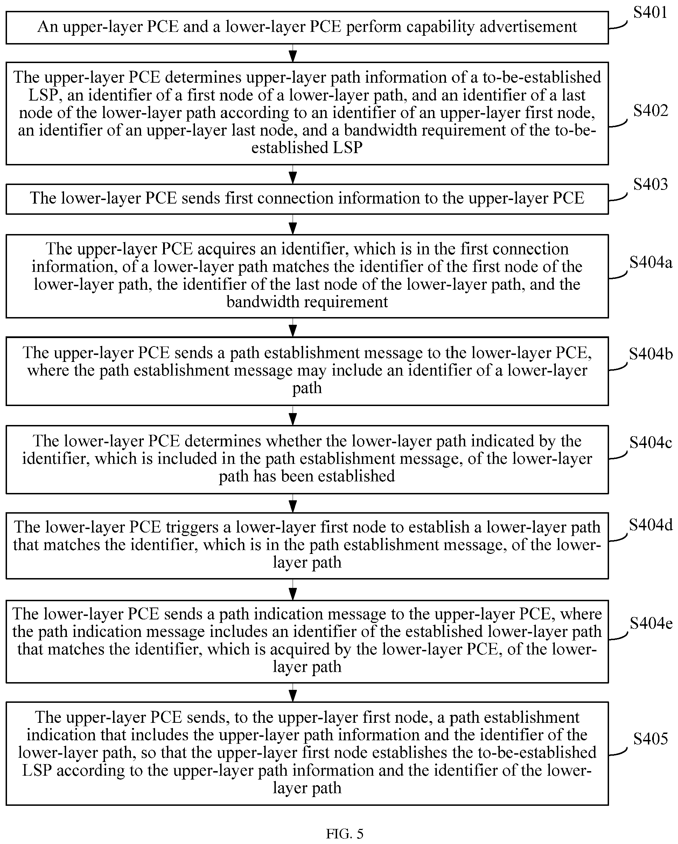

This embodiment provides a cross-layer path establishment method. As shown in FIG. 5, the method includes: S401: An upper-layer PCE and a lower-layer PCE perform capability advertisement.

The upper-layer PCE and the lower-layer PCE perform capability advertisement to determine, from the upper-layer PCE and the lower-layer PCE, a PCE used to initiate an LSP establishment indication and a PCE used to receive the LSP establishment indication, so as to establish an LSP. In this embodiment, the upper-layer PCE is used to initiate the LSP establishment indication; the lower-layer PCE is used to receive the LSP establishment indication initiated by the upper-layer PCE, and compute, according to the LSP establishment indication, a lower-layer path used to carry upper-layer service data.

Specifically, interaction between the upper-layer PCE and the lower-layer PCE may be sending messages to each other, for example, the capability advertisement may be performed by adding two bit (bit) positions (PI and PT) to an existing Open message of a PCE protocol (PCE protocol, PCEP), and a PCE interaction capability (Inter-PCE capability) object may be added to an Open message to represent the capability. A TLV (which includes three fields: type (Type), length (Length), and value (Value)) format is used, and the format of the Inter-PCE capability object is shown in Table 1, where,
PI=1 indicates that an entity sending this bit position supports PCE interaction;
PI=0 indicates that an entity sending this bit position does not support PCE interaction;
PT=1 indicates that an entity sending this bit position sends a path establishment instruction; and
PT=0 indicates that an entity sending this bit position receives a path establishment instruction.

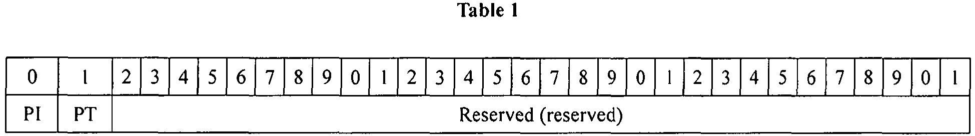

In this embodiment, the Inter-PCE capability object of the upper-layer PCE should be set as follows: PI=1 and PT=1; the Inter-PCE capability object of the lower-layer PCE should be set as follows: PI=1 and PT=0.

It should be noted that, PT makes sense only on the premise that PI=1; otherwise, if PI is not equal to 1, a value of PT is ignored. In addition, the Inter-PCE capability objects of the two entities that perform capability advertisement can only be set to that PI=1 and PT=1 (for example, an upper layer) and that PI=1 and PT=0 (for example, a lower layer), respectively. If other combinations of values of PI and PT occur, the interaction between the two entities that perform the capability advertisement needs to be disabled. In this embodiment, the upper-layer PCE is an entity that sends an LSP establishment instruction, and the lower-layer LSP is an entity that receives the LSP establishment instruction. This embodiment is applied to a scenario of establishing an LSP that crosses an upper layer and a lower layer; the upper-layer PCE sends a bottom-layer path establishment instruction to the lower-layer PCE, and the lower-layer LSP receives the bottom-layer path establishment instruction from the upper-layer PCE.

Optionally, the upper-layer PCE and the lower-layer PCE may also perform capability advertisement in another manner, for example, the upper-layer PCE and the lower-layer PCE may establish an OSPF neighbor relationship, and send PCE capability discovery (PCED) objects of the OSPF to each other by using a control channel, to indicate which PCE is an entity that sends an LSP establishment instruction and which PCE is an entity that receives the LSP establishment instruction. A specific format of the PCED object may be the same as the format of the Inter-PCE capability object, and a difference lies in that the PCED object is sent by being carried in a PCED message of the OSPF protocol.

S402: The upper-layer PCE determines upper-layer path information of a to-be-established LSP, an identifier of a first node of a lower-layer path, and an identifier of a last node of the lower-layer path according to an identifier of an upper-layer first node, an identifier of an upper-layer last node, and a bandwidth requirement of the to-be-established LSP.

The upper-layer path information includes an identifier of an upper-layer node that the to-be-established LSP passes through. As a bottom-layer path of the to-be-established LSP, the lower-layer path is used to carry upper-layer service data. The to-be-established LSP refers to an LSP that is going to be established by the upper-layer first node (which is a start node of the to-be-established LSP), from the upper-layer first node to the upper-layer last node (which is an end node of the to-be-established LSP), and that meets the bandwidth requirement. If the upper-layer PCE cannot compute a path from the upper-layer first node to the upper-layer last node and that meets the bandwidth requirement of the to-be-established LSP, a lower-layer path needs to be established at a lower layer to serve as a bottom-layer path of the to-be-established LSP, to carry upper-layer service data. The upper-layer PCE needs to determine the upper-layer path information, the identifier of the first node of the lower-layer path, and the identifier of the last node of the lower-layer path. The identifier of the first node of the lower-layer path is used to indicate a start node of the bottom-layer path of the to-be-established LSP, and the identifier of the last node of the lower-layer path is used to indicate an end node of the bottom-layer path of the to-be-established LSP.

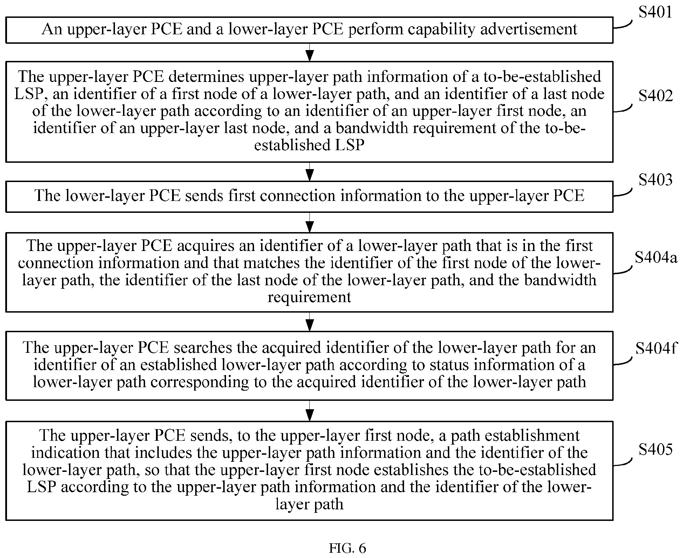

Optionally, as shown in FIG. 5 or FIG. 6, in a first application scenario in this embodiment, after the upper-layer PCE determines the identifier of the first node of the lower-layer path, the identifier of the last node of the lower-layer path, and the bandwidth requirement, the method in this embodiment may further include S403:
S403: The lower-layer PCE sends first connection information to the upper-layer PCE.

The first connection information includes planning information of a planned lower-layer path on a network on which the lower-layer PCE is located; the planned lower-layer path includes: an established lower-layer path and a lower-layer path that has been planned but not yet established.

The planning information includes at least the identifier of the lower-layer path, the identifier of the first node of the lower-layer path, the identifier of the last node of the lower-layer path, and bandwidth information of the lower-layer path.

The first connection information may be sent by being carried in a virtual network topology report (Virtual Network Topology Report, VNTRpt) message. For example, a ConnecInfo object may be defined in VNTRpt to represent the first connection information. A format of the ConnecInfo object is shown in Table 2. No. of Entry represents a quantity, that is, N, of connection information entries (Entry), and the field occupies eight bit positions; Length represents a message length, and the field occupies eight bit positions; Reserved represents a reserved field, the field occupies 16 bit positions; Connec. Entry 1 to Connec. Entry N represent connection information entries 1 to N, and the field has a variable length, which is an integer multiple of 32 bits.

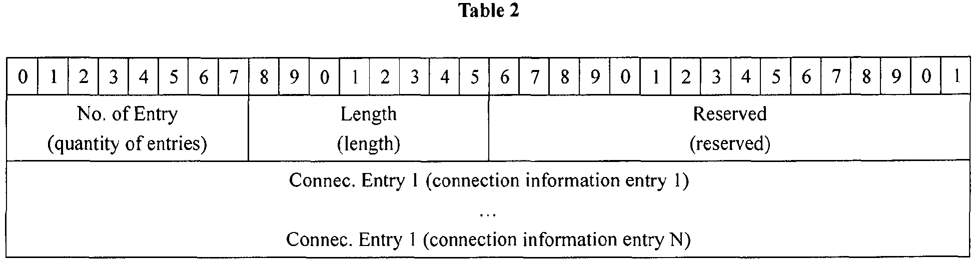

Each Connec. Entry object represents information about a connection path, and a format of the Connec. Entry object is shown in Table 3. Type represents a type, and the field occupies four bit positions; Length represents a message length, and the field occupies eight bit positions; Reserved represents a reserved field, and the field occupies 20 bit positions; Bandwidth represents bandwidth, and the field occupies 32 bit positions; Optional TLVs represents optional TLV formats, and information carried in the Optional TLVs field varies according to different values of Type. Currently, Type may define the following types:
Type=1: The Optional TLVs field may carry node list information (which includes at least a first node and a last node, and may include an intermediate node). Type=1 may be indicated by using 0001.
Type=2: The Optional TLVs field may carry node list information (which includes at least a first node and a last node, and may include an intermediate node) and other attribute information (such as a shared risk link group and a delay). Type=2 may be indicated by using 0010.
Type=3: The Optional TLVs field may carry node list information (which includes at least a first node and a last node, and may include an intermediate node) and status information (for example, whether the path is already established). Type=3 may be indicated by using 0011.

The foregoing types of Type are only examples, and in an actual application, a new type of Type may be extended according to a need.

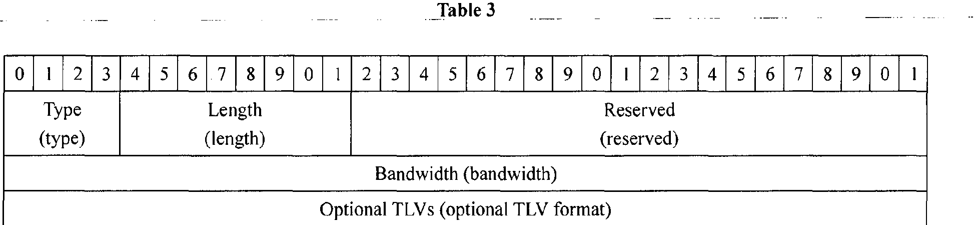

S404: The upper-layer PCE acquires an identifier of an established lower-layer path that matches the identifier of the first node of the lower-layer path, the identifier of the last node of the lower-layer path, and the bandwidth requirement.

S404a: The upper-layer PCE acquires an identifier, which is in the first connection information, of a lower-layer path that matches the identifier of the first node of the lower-layer path, the identifier of the last node of the lower-layer path, and the bandwidth requirement.

Optionally, in a first situation of the first application scenario, the upper-layer PCE may send, to the lower-layer PCE, a path establishment message that includes an acquired identifier of a lower-layer path, so that the lower-layer PCE determines an identifier of an established lower-layer path from the identifier, which is in the path establishment message, of the lower-layer path.

Specifically, in this situation, as shown in FIG. 5, S404 may include S404a to S404e:
S404b: The upper-layer PCE sends a path establishment message to the lower-layer PCE, where the path establishment message includes an identifier of a lower-layer path.
S404c: The lower-layer PCE determines whether the lower-layer path indicated by the identifier, which is included in the path establishment message, of the lower-layer path has been established.

If the lower-layer PCE determines that the lower-layer path indicated by the identifier of the lower-layer path has not been established, S404d and S404e are performed; or if the lower-layer PCE determines that the lower-layer path indicated by the identifier of the lower-layer path has been established, S404e is directly performed.

S404d: The lower-layer PCE triggers a lower-layer first node to establish a lower-layer path that matches the identifier, which is in the path establishment message, of the lower-layer path.

The identifier, which is in the path establishment message, of the lower-layer path is an identifier, acquired by the upper-layer PCE from the first connection information, of a planned lower-layer path. The lower-layer path indicated by the identifier, which is in the path establishment message, of the lower-layer path has been planned. Therefore, the lower-layer first node may establish a corresponding lower-layer path according to the identifier, which is in the path establishment message, of the lower-layer path.

S404e: The lower-layer PCE sends a path indication message to the upper-layer PCE, where the path indication message includes an identifier of the established lower-layer path that matches the identifier, which is acquired by the lower-layer PCE, of the lower-layer path.

Specifically, the path indication message may be an existing path computation report (Path Computation Report, PCRpt) message in the PCEP protocol. The lower-layer PCE may send, to the upper-layer PCE, the identifier of the established lower-layer path by using a PCRpt message.

Further optionally, the path indication message in this embodiment may also be a path establishment report (Path Establishment Report, PERpt) message redefined in the PCEP protocol. The lower-layer PCE may send, to the upper-layer PCE, the identifier of the established lower-layer path by using a PERpt message. A format of a PERpt object is shown in Table 4. A link identifier (Link ID Type) represents an information type of a link identifier, and the field occupies eight bit positions; a link status flag (Link Status Flag) represents a status of a link, and the field occupies nine bit positions; Reserved represents a reserved field, and the field occupies 15 bit positions; Optional TLVs represents optional TLV formats. According to different values of Link ID Type, the Optional TLVs field may carry different content.

Currently, types defined by Link ID Type are:
Link ID Type=1: The Optional TLVs field identifies a link by using a single identifier (Single Identifier), where the single identifier occupies 32 bit positions, and is unique to each link. Type=1 may be indicated by using 00000001.
Link ID Type=2: The Optional TLVs field identifies a link by using node pair information (NodePair Identifier) that includes a first node and a last node. Type=2 may be indicated by using 00000010.

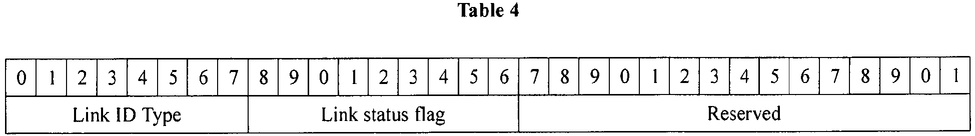

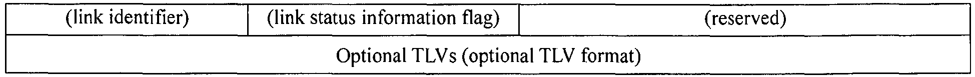

When a status bit of Link Status Flag is 1, it indicates that the lower-layer path is already established (Established); or when the status bit of Link Status Flag is 0, it indicates that establishment of the lower-layer path has failed (Failed).

Further optionally, in a second situation of the first application scenario, the planning information in the first connection information may further include: status information of a lower-layer path. The status information of the lower-layer path is used to indicate that the lower-layer path has been established or that the lower-layer path has been planned but not yet established.

The status information of the lower-layer path may be sent by being carried in the Optional TLVs field of the Connec. Entry object. Specifically, Type of the Connec. Entry object may be set to 3, and in this case, the Optional TLVs field in the Connec. Entry object carries the status information. Certainly, a new type of Type of the Connec. Entry object may also be defined, so that the Connec. Entry object includes the status information of the lower-layer path.

In the second situation, status information of a lower-layer path may be used to indicate whether the lower-layer path has been established. Therefore, after acquiring identifiers, which are in the first connection information, of lower-layer paths that match the identifier of the first node of the lower-layer path, the identifier of the last node of the lower-layer path, and the bandwidth requirement, the upper-layer PCE may directly determine an identifier of an established lower-layer path, among the acquired lower-layer paths, according to status information of the lower-layer paths.

Specifically, in the second situation, as shown in FIG. 6, S404 may include S404a and S404f:
S404f: The upper-layer PCE searches the acquired identifier of the lower-layer path for the identifier of the established lower-layer path according to status information of the lower-layer path corresponding to the acquired identifier of the lower-layer path.

It should be noted that, the upper-layer PCE may also first search the first connection information for established lower-layer paths, and then search the established lower-layer paths for a lower-layer path that matches the identifier of the first node of the lower-layer path, the identifier of the last node of the lower-layer path, and the bandwidth requirement. That is, the upper-layer PCE may first search for identifiers of established lower-layer paths according to status information in the first connection information; and the upper-layer PCE determines, among lower-layer paths indicated by the found identifiers of the established lower-layer paths, a lower-layer path that matches the identifier of the first node of the lower-layer path, the identifier of the last node of the lower-layer path, and the bandwidth requirement, and acquires an identifier of the lower-layer path.

Further optionally, because status information, which is included in first connection information, of a lower-layer path may be used to indicate whether the lower-layer path has been established, and the status information of the lower-layer path may change, for example, the lower-layer path may change from a not-established state to an established state, the status information of the lower-layer path needs to be updated in real time, so that the upper-layer PCE obtains currently latest status information of the lower-layer path.

Therefore, in the second situation of the first application scenario in this embodiment, the method in this embodiment may further include: sending, by the lower-layer PCE, second connection information to the upper-layer PCE, where the second connection information includes at least an identifier of a lower-layer path whose status information changes, and status update information of the lower-layer path whose status information changes, where the status update information is used for updating, by the upper-layer PCE according to the identifier of the lower-layer path whose status information changes, the status information of the lower-layer path whose status information changes.

The second connection information may also be sent by being carried in a PERpt message. For a specific format of the PERpt message, reference may be made to a related description in S404, and details are not described herein again in this embodiment.

Further it should be noted that, in the second situation of the first application scenario in this embodiment, if the upper-layer PCE does not find, in the acquired identifier of the lower-layer path, the identifier of the established lower-layer path according to the status information of the lower-layer path corresponding to the acquired identifier of the lower-layer path, the upper-layer PCE may use the method in the first situation, to send, to the lower-layer PCE, a path establishment message that includes the acquired identifier of the lower-layer path, so that the lower-layer PCE triggers the lower-layer first node to establish a lower-layer path indicated by the identifier, which is in the path establishment message, of the lower-layer path, and acquires an identifier of the established lower-layer path.

In the second application scenario in this embodiment, the upper-layer PCE may directly send a path establishment message that includes an identifier of a first node of a to-be-established lower-layer path, an identifier of a last node of the lower-layer path, and a bandwidth requirement to the lower-layer PCE, and the lower-layer PCE determines an established lower-layer path that matches the identifier of the first node of the lower-layer path, the identifier of the last node of the lower-layer path, and the bandwidth requirement, and sends an identifier of the lower-layer path determined by the lower-layer PCE to the upper-layer PCE.

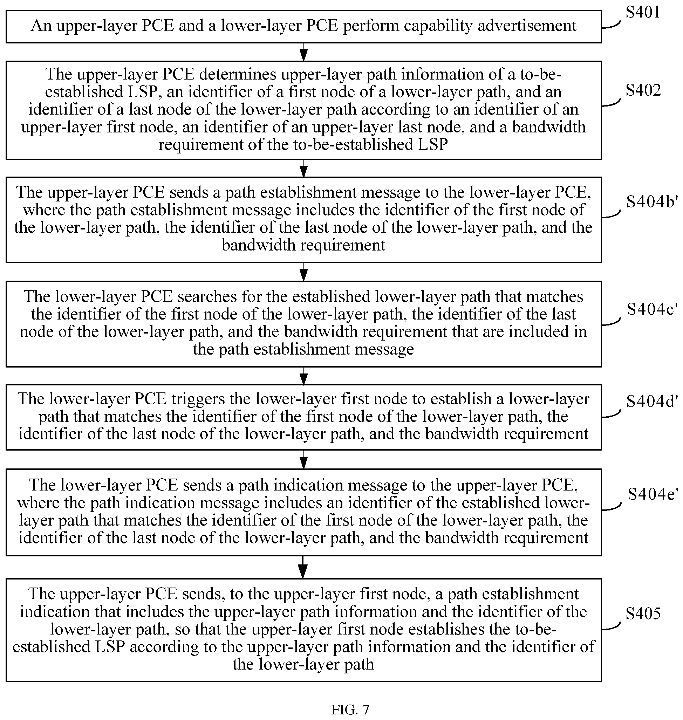

Specifically, in the second application scenario, as shown in FIG. 7, the method in this embodiment may not include S403, and in the second application scenario, S404 may include S404b' and S404c':
S404b': The upper-layer PCE sends a path establishment message to the lower-layer PCE, where the path establishment message includes the identifier of the first node of the lower-layer path, the identifier of the last node of the lower-layer path, and the bandwidth requirement.
S404c': The lower-layer PCE searches for the established lower-layer path that matches the identifier of the first node of the lower-layer path, the identifier of the last node of the lower-layer path, and the bandwidth requirement that are included in the path establishment message.

If the lower-layer PCE does not find the established lower-layer path that matches the identifier of the first node of the lower-layer path, the identifier of the last node of the lower-layer path, and the bandwidth requirement that are included in the path establishment message, S404d' to S404e' are performed; or if the lower-layer PCE finds the established lower-layer path that matches the identifier of the first node of the lower-layer path, the identifier of the last node of the lower-layer path, and the bandwidth requirement that are included in the path establishment message, S404e' is directly performed.

S404d': The lower-layer PCE triggers the lower-layer first node to establish a lower-layer path that matches the identifier of the first node of the lower-layer path, the identifier of the last node of the lower-layer path, and the bandwidth requirement.

S404e': The lower-layer PCE sends a path indication message to the upper-layer PCE, where the path indication message includes an identifier of the established lower-layer path that matches the identifier of the first node of the lower-layer path, the identifier of the last node of the lower-layer path, and the bandwidth requirement.

Specifically, the path indication message that is sent by the lower-layer PCE to the upper-layer PCE and that includes the identifier of the established lower-layer path matching the identifier of the first node of the lower-layer path, the identifier of the last node of the lower-layer path, and the bandwidth requirement is similar to the path indication message described in S404e, and details are not described herein again in this embodiment.

S405: The upper-layer PCE sends, to the upper-layer first node, a path establishment indication that includes the upper-layer path information and the identifier of the lower-layer path, so that the upper-layer first node establishes the to-be-established LSP according to the upper-layer path information and the identifier of the lower-layer path.

It should be noted that, if bandwidth of the lower-layer path changes, bandwidth change information of the lower-layer path needs to be reported to the upper-layer PCE in real time, and S406 and S407 need to be performed. S406 and S407 may be set after any one of the foregoing steps, and as long as the bandwidth of the lower-layer path changes, S406 and S407 may be performed. This is not limited herein in this embodiment.

S406: The lower-layer PCE reports, to the upper-layer PCE, bandwidth change information, which is in planning information, of the lower-layer path, where the bandwidth change information is used to represent a service bearing status of the lower-layer path.

The bandwidth change information may be used to represent the service bearing status of the lower-layer path. When the service bearing status changes from carrying no service to carrying one or more services, available bandwidth decreases; and when the service bearing status changes from carrying one or more services to carrying no service, the available bandwidth increases. Accordingly, if bandwidth information changes, it indicates that the service bearing status of the lower-layer path changes.

The lower-layer PCE may obtain the bandwidth change information of the lower-layer path according to information reported by the lower-layer first node, and report, to the upper-layer PCE, the obtained bandwidth change information of the lower-layer path. The bandwidth change information of the lower-layer path reported by the lower-layer first node reports to the lower-layer PCE may be carried in a PCRpt message. The bandwidth change information of the lower-layer path reported by the lower-layer PCE to the upper-layer PCE may be carried in a VNTRpt message defined in the foregoing.

Specifically, a flag bit (B) may be defined in a PCRpt message sent by the lower-layer first node to the lower-layer PCE, to identify the service bearing status of the lower-layer path. Specifically, that the lower-layer path carries no service may be indicated by using B=0, and that the lower-layer path carries one or more services may be indicated by using B=1; in addition, when B=1, the PCRpt message further includes a size of remaining available bandwidth of the lower-layer path.

It should be noted that, services carried by a lower-layer path are divided into two categories: one category is upper-layer service, and the other category is local-domain (lower-layer) service. A priority may be allocated to a service, and a priority threshold may be set. On the premise that a resource for an upper-layer service is reserved at the lower layer, a lower-layer service with a low priority may be allowed to temporarily use the reserved resource. If a priority of a lower-layer service temporarily using a reserved resource is lower than the priority threshold, the resource used by the service is considered as an available resource. Corresponding to this step, if a priority of a lower-layer service temporarily using a reserved resource is lower than the priority threshold, it may be considered that the bandwidth of the lower-layer path does not change, and the service bearing status is carrying no service, that is, B=0. When the upper-layer service needs to preempt the resource, the lower-layer service that uses the resource needs to be interrupted first. In this way, when the upper-layer service does not use the reserved resource, a lower-layer service with a low priority may temporarily use the reserved resource, which can increase resource utilization.

S407: The upper-layer PCE updates bandwidth information of the lower-layer path according to the bandwidth change information.

Compared with the prior art in which there is a problem that a bottom-layer path may already be occupied by another service or has inadequate bandwidth due to a delay in a process from computing a path by a lower-layer PCE to completing establishment of a path crossing an upper layer and a lower layer, which further leads to a subsequent unsuccessful path establishment or causes the established path to fail to meet a bandwidth requirement, in the solution of the cross-layer path establishment method provided in this embodiment, a lower-layer path acquired by an upper-layer PCE is an established bottom-layer path that is used to carry upper-layer service data, and when establishing a complete path subsequently, an upper-layer first node no longer needs to establish a bottom-layer path, and therefore a case in which the bottom-layer path is occupied by another service does not occur; the lower-layer path acquired by an upper layer is a path that meets a bandwidth requirement, and therefore a case of inadequate bandwidth does not occur; and in this way, a path establishment success rate of the upper-layer first node can be increased.

### Embodiment 5

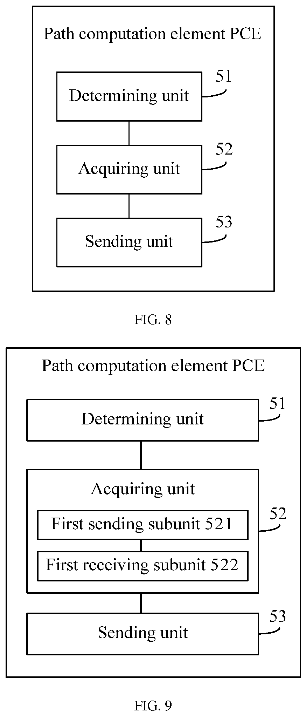

This embodiment of the present invention provides a PCE. As shown in FIG. 8, the PCE includes: a determining unit 51, an acquiring unit 52, and a sending unit 53.

The determining unit 51 is configured to determine upper-layer path information of a to-be-established LSP, an identifier of a first node of a lower-layer path, and an identifier of a last node of the lower-layer path according to an identifier of an upper-layer first node, an identifier of an upper-layer last node, and a bandwidth requirement of the to-be-established LSP, where the upper-layer path information includes an identifier of an upper-layer node that the to-be-established LSP passes through, and the lower-layer path is used as a bottom-layer path of the to-be-established LSP, to carry upper-layer service data.

The acquiring unit 52 is configured to acquire an identifier of an established lower-layer path that matches the identifier of the first node of the lower-layer path-and the identifier of the last node of the lower-layer path that are determined by the determining unit 51, and the bandwidth requirement.

The sending unit 53 is configured to send, to the upper-layer first node, a path establishment indication that includes the upper-layer path information and the identifier of the lower-layer path that are acquired by the acquiring unit 52, so that the upper-layer first node establishes the to-be-established LSP according to the upper-layer path information and the identifier of the lower-layer path.

Optionally, corresponding to the different application scenarios in Embodiment 4, this PCE may vary in some degree.

Corresponding to the second application scenario in Embodiment 4, as shown in FIG. 9, the acquiring unit 52 may include: a first sending subunit 521 and a first receiving subunit 522.

The first sending subunit 521 is configured to send a path establishment message to a lower-layer PCE, where the path establishment message includes the identifier of the first node of the lower-layer path and the identifier of the last node of the lower-layer path that are determined by the determining unit 51, and the bandwidth requirement.

The first receiving subunit 522 is configured to receive a path indication message from the lower-layer PCE, where the path indication message includes the identifier of the established lower-layer path that matches the identifier of the first node of the lower-layer path, the identifier of the last node of the lower-layer path, and the bandwidth requirement that are in the path establishment message sent by the first sending subunit 521.

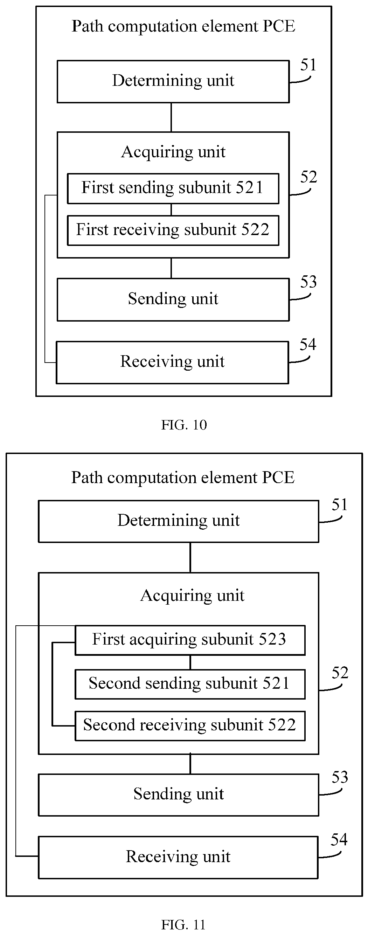

Corresponding to the first application scenario in Embodiment 4, as shown in FIG. 10, this PCE further includes a receiving unit 54.

The receiving unit 54 is configured to: before the acquiring unit 52 acquires the identifier of the established lower-layer path that matches the identifier of the first node of the lower-layer path, the identifier of the last node of the lower-layer path, and the bandwidth requirement, receive first connection information from a lower-layer PCE, where the first connection information includes planning information of a planned lower-layer path on a network on which the lower-layer PCE is located, where the planned lower-layer path includes: the established lower-layer path and a lower-layer path that has been planned but not yet established.

The planning information includes at least the identifier of the lower-layer path, the identifier of the first node of the lower-layer path, the identifier of the last node of the lower-layer path, and bandwidth information of the lower-layer path.

Corresponding to the first situation of the first application scenario in Embodiment 4, as shown in FIG. 11, the acquiring unit 52 may include: a first acquiring subunit 523, a second sending subunit 521, and a second receiving subunit 522.

The first acquiring subunit 523 is configured to acquire an identifier, which is in the first connection information received by the receiving unit 54, of a lower-layer path that matches the identifier of the first node of the lower-layer path, the identifier of the last node of the lower-layer path, and the bandwidth requirement.

The second sending subunit 521 is configured to send a path establishment message to the lower-layer PCE, where the path establishment message includes the identifier, which is acquired by the first acquiring subunit 523, of the lower-layer path.

The second receiving subunit 522 is configured to receive a path indication message from the lower-layer PCE, where the path indication message includes an identifier of an established lower-layer path that corresponds to the identifier, which is acquired by the first acquiring subunit 523, of the lower-layer path.

Corresponding to the second situation of the first application scenario in Embodiment 4, the planning information further includes: status information of the lower-layer path, where the status information of the lower-layer path is used to indicate that the lower-layer path has been established or the lower-layer path has been planned but not yet established.

Corresponding to the second situation of the first application scenario in Embodiment 4, the receiving unit 54 is further configured to: before the acquiring unit 52 acquires the identifier of the established lower-layer path that matches the identifier of the first node of the lower-layer path, the identifier of the last node of the lower-layer path, and the bandwidth requirement, receive second connection information from the lower-layer PCE, where the second connection information includes at least an identifier of a lower-layer path whose status information changes, and status update information of the lower-layer path whose status information changes.

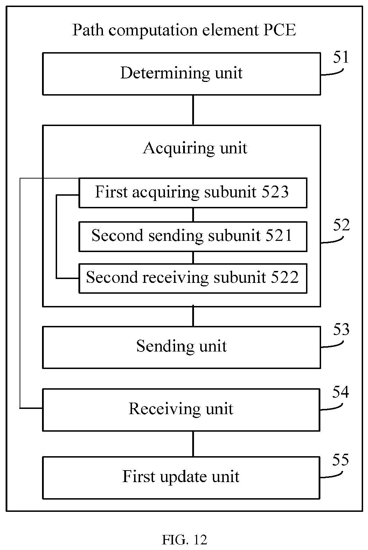

Corresponding to the second situation of the first application scenario in Embodiment 4, as shown in FIG. 12, this PCE may further include a first update unit 55.

The first update unit 55 is configured to update, according to the identifier, which is received by the receiving unit 54, of the lower-layer path whose status information changes and by using the status update information, the status information of the lower-layer path whose status information changes.

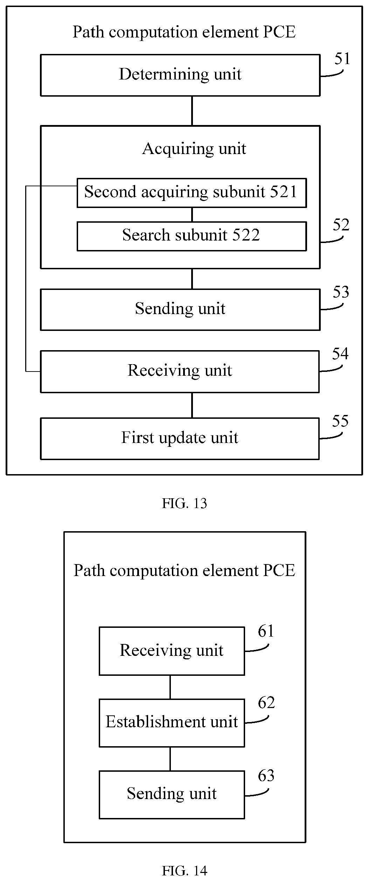

Corresponding to the second situation of the first application scenario in Embodiment 4, as shown in FIG. 13, the acquiring unit 52 may include: a second acquiring subunit 521 and a search subunit 522.

The second acquiring subunit 521 is configured to acquire an identifier, which is in the first connection information received by the receiving unit 54, of a lower-layer path that matches the identifier of the first node of the lower-layer path, the identifier of the last node of the lower-layer path, and the bandwidth requirement.

The search subunit 522 is configured to search the identifier, which is acquired by the second acquiring subunit 521, of the lower-layer path for the identifier of the established lower-layer path according to status information of the lower-layer path corresponding to the acquired identifier of the lower-layer path.

In either of the foregoing scenarios, the receiving unit 54 is further configured to receive bandwidth change information, which is in the planning information from the lower-layer PCE, of the lower-layer path, where the bandwidth change information is used to represent a service bearing status of the lower-layer path.

In either of the foregoing scenarios, this PCE further includes a second update unit 56.

The second update unit 56 is configured to update the bandwidth information of the lower-layer path according to the bandwidth change information received by the receiving unit 54.

It should be noted that, for specific descriptions of some functional modules in the PCE that is provided by this embodiment of the present invention, reference may be made to corresponding content in the method embodiments, and details are not described herein again in this embodiment.

Compared with the prior art in which there is a problem that a bottom-layer path may already be occupied by another service or has inadequate bandwidth due to a delay in a process from computing a path by a lower-layer PCE to completing establishment of a path crossing an upper layer and a lower layer, which further leads to a subsequent unsuccessful path establishment or causes the established path to fail to meet a bandwidth requirement, in the solution of the PCE provided in this embodiment of the present invention, a lower-layer path acquired by the PCE is an established bottom-layer path that is used to carry upper-layer service data, and when establishing a complete path subsequently, an upper-layer first node no longer needs to establish a bottom-layer path, and therefore a case in which the bottom-layer path is occupied by another service does not occur; the lower-layer path acquired by an upper layer is a path that meets a bandwidth requirement, and therefore a case of inadequate bandwidth does not occur; and in this way, a path establishment success rate of the upper-layer first node can be increased.

### Embodiment 6

This embodiment provides a PCE. As shown in FIG. 14, the PCE may include: a receiving unit 61, an establishment unit 62, and a sending unit 63.

The receiving unit 61 is configured to receive a path establishment message from an upper-layer PCE, where the path establishment message is used to instruct a lower-layer first node to establish a lower-layer path that is used as a bottom-layer path of a to-be-established LSP, to carry upper-layer service data; and the path establishment message includes: an identifier of a first node of the lower-layer path, an identifier of a last node of the lower-layer path, and a bandwidth requirement.

The establishment unit 62 is configured to: if a lower-layer path that matches the identifier of the first node of the lower-layer path, the identifier of the last node of the lower-layer path, and the bandwidth requirement that are in the path establishment message received by the receiving unit 61 has not been established, establish the lower-layer path that matches the identifier of the first node of the lower-layer path, the identifier of the last node of the lower-layer path, and the bandwidth requirement.

The sending unit 63 is configured to send, to the upper-layer PCE, a path indication message that includes an identifier of the lower-layer path established by the establishment unit 62; or if a lower-layer path that matches the identifier of the first node of the lower-layer path, the identifier of the last node of the lower-layer path, and the bandwidth requirement that are in the path establishment message received by the receiving unit 61 has been established, send, to the upper-layer PCE, a path indication message that includes an identifier of the established lower-layer path, so that the upper-layer PCE sends, to an upper-layer first node, a path establishment indication that includes the identifier, which is in the path indication message, of the established lower-layer path, and the upper-layer first node establishes the to-be-established LSP.

It should be noted that, for specific descriptions of some functional modules in the PCE that is provided by this embodiment, reference may be made to corresponding content in the method embodiments, and details are not described herein again in this embodiment.

The PCE provided in this embodiment may receive a path establishment message from an upper-layer PCE; and if a lower-layer path that matches an identifier of a first node of a lower-layer path, an identifier of a last node of the lower-layer path, and a bandwidth requirement that are in the path establishment message has been established, send, to the upper-layer PCE, a path indication message that includes an identifier of the established lower-layer path; or if a lower-layer path that matches an identifier of a first node of a lower-layer path, an identifier of a last node of the lower-layer path, and a bandwidth requirement that are in the path establishment message has not been established, establish the lower-layer path that matches the identifier of the first node of the lower-layer path, the identifier of the last node of the lower-layer path, and the bandwidth requirement, and send, to the upper-layer PCE, a path indication message that includes an identifier of the established lower-layer path, so that the upper-layer PCE sends, to an upper-layer first node, a path establishment indication that includes the identifier, which is in the path indication message, of the established lower-layer path, and the upper-layer first node establishes a to-be-established LSP.

Compared with the prior art in which there is a problem that a bottom-layer path may already be occupied by another service or has inadequate bandwidth due to a delay in a process from computing a path by a local PCE to completing establishment of a path crossing an upper layer and a lower layer, which further leads to a subsequent unsuccessful path establishment or causes the established path to fail to meet a bandwidth requirement, in this solution, after receiving a path establishment message from an upper-layer PCE, a PCE may send, to the upper-layer PCE, a path indication message that includes an identifier of an established lower-layer path. Because a lower-layer path indicated by the identifier, which is received by the upper-layer PCE, of the lower-layer path is an established bottom-layer path that is used to carry upper-layer service data, when establishing a complete path subsequently, an upper-layer first node no longer needs to establish a bottom-layer path, and therefore a case in which the bottom-layer path is occupied by another service does not occur; the lower-layer path acquired by an upper layer is a path that meets a bandwidth requirement, and therefore a case of inadequate bandwidth does not occur; and in this way, a path establishment success rate of the upper-layer first node can be increased.

### Embodiment 7

This embodiment of the present invention provides a PCE. As shown in FIG. 14, the PCE may include: a receiving unit 61, an establishment unit 62, and a sending unit 63.

The receiving unit 61 is configured to receive a path establishment message from an upper-layer PCE, where the path establishment message is used to instruct a lower-layer first node to establish a lower-layer path that is used as a bottom-layer path of a to-be-established LSP, to carry upper-layer service data; and the path establishment message includes: an identifier of the lower-layer path.

The establishment unit 62 is configured to: if a lower-layer path that matches the identifier, which is in the path establishment message received by the receiving unit 61, of the lower-layer path has not been established, establish the lower-layer path that matches the identifier of the lower-layer path.

The sending unit 63 is configured to send, to the upper-layer PCE, a path indication message that includes an identifier of the lower-layer path established by the establishment unit 62; or if a lower-layer path that matches the identifier, which is in the path establishment message received by the receiving unit 61, of the lower-layer path has been established, send, to the upper-layer PCE, a path indication message that includes an identifier of the established lower-layer path, so that the upper-layer PCE sends, to an upper-layer first node, a path establishment indication that includes the identifier, which is in the path indication message, of the established lower-layer path, and the upper-layer first node establishes the to-be-established LSP.

Optionally, corresponding to different application scenarios in Embodiment 4, this PCE may vary in some degrees.

Corresponding to the first application scenario in Embodiment 4, the sending unit 63 is further configured to: before the receiving unit 61 receives the path establishment message from the upper-layer PCE, send first connection information to the upper-layer PCE, where the first connection information includes planning information of a planned lower-layer path on a network on which this PCE is located, where the planned lower-layer path includes: the established lower-layer path and a lower-layer path that has been planned but not yet established.

The planning information includes at least an identifier of the planned lower-layer path, the identifier of the first node of the lower-layer path, the identifier of the last node of the lower-layer path, and bandwidth information of the lower-layer path.

Corresponding to the second situation of the first application scenario in Embodiment 4, the planning information further includes: status information of the lower-layer path, where the status information of the lower-layer path is used to indicate that the lower-layer path has been established or the lower-layer path has been planned but not yet established.

Corresponding to the second situation of the first application scenario in Embodiment 4, the sending unit 63 is further configured to send second connection information to the upper-layer PCE, where the second connection information includes at least an identifier of a lower-layer path whose status information changes, and status update information of the lower-layer path whose status information changes, where the status update information is used for updating, by the upper-layer PCE according to the identifier of the lower-layer path whose status information changes, the status information of the lower-layer path whose status information changes.

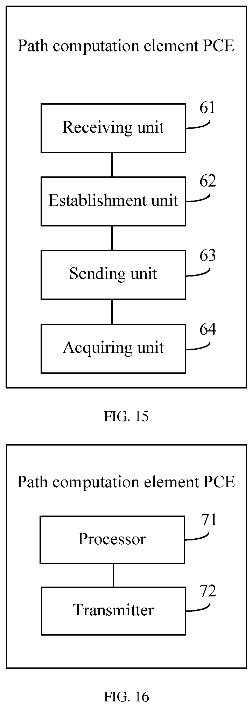

In either of the foregoing scenarios, as shown in FIG. 15, this PCE further includes an acquiring unit 64.

The acquiring unit 64 is configured to acquire bandwidth change information, which is in the planning information, of the lower-layer path, where the bandwidth change information is used to represent a service bearing status of the lower-layer path.

The sending unit 63 is further configured to send the bandwidth change information to the upper-layer PCE, so that the upper-layer PCE updates the bandwidth information of the lower-layer path according to the bandwidth change information.

It should be noted that, for specific descriptions of some functional modules in the PCE that is provided by this embodiment of the present invention, reference may be made to corresponding content in the method embodiments, and details are not described herein again in this embodiment.

The PCE provided in this embodiment of the present invention may receive a path establishment message from an upper-layer PCE; and if a lower-layer path that matches an identifier, which is in the path establishment message, of a lower-layer path has been established, send, to the upper-layer PCE, a path indication message that includes an identifier of the established lower-layer path; or if a lower-layer path that matches an identifier, which is in the path establishment message, of a lower-layer path has not been established, establish the lower-layer path that matches the identifier of the lower-layer path, and send, to the upper-layer PCE, a path indication message that includes an identifier of the established lower-layer path, so that the upper-layer PCE sends, to an upper-layer first node, a path establishment indication that includes the identifier, which is in the path indication message, of the established lower-layer path, and the upper-layer first node establishes a to-be-established LSP.

Compared with the prior art in which there is a problem that a bottom-layer path may already be occupied by another service or has inadequate bandwidth due to a delay in a process from computing a path by a local PCE to completing establishment of a path crossing an upper layer and a lower layer, which further leads to a subsequent unsuccessful path establishment or causes the established path to fail to meet a bandwidth requirement, in this solution, after receiving a path establishment message from an upper-layer PCE, a PCE may send, to the upper-layer PCE, a path indication message that includes an identifier of an established lower-layer path. Because a lower-layer path indicated by the identifier, which is received by the upper-layer PCE, of the lower-layer path is an established bottom-layer path that is used to carry upper-layer service data, when establishing a complete path subsequently, an upper-layer first node no longer needs to establish a bottom-layer path, and therefore a case in which the bottom-layer path is occupied by another service does not occur; the lower-layer path acquired by an upper layer is a path that meets a bandwidth requirement, and therefore a case of inadequate bandwidth does not occur; and in this way, a path establishment success rate of the upper-layer first node can be increased.

### Embodiment 8

This embodiment provides a PCE. As shown in FIG. 16, the PCE includes: a processor 71 and a transmitter 72.

The processor 71 is configured to determine upper-layer path information of a to-be-established LSP, an identifier of a first node of a lower-layer path, and an identifier of a last node of the lower-layer path according to an identifier of an upper-layer first node, an identifier of an upper-layer last node, and a bandwidth requirement of the to-be-established LSP, where the upper-layer path information includes an identifier of an upper-layer node that the to-be-established LSP passes through, and the lower-layer path is used as a bottom-layer path of the to-be-established LSP, to carry upper-layer service data; and acquire an identifier of an established lower-layer path that matches the identifier of the first node of the lower-layer path, the identifier of the last node of the lower-layer path, and the bandwidth requirement.

The transmitter 72 is configured to send, to the upper-layer first node, a path establishment indication that includes the upper-layer path information and the identifier of the lower-layer path that are acquired by the processor 71, so that the upper-layer first node establishes the to-be-established LSP according to the upper-layer path information and the identifier of the lower-layer path.

Optionally, corresponding to different application scenarios in Embodiment 4, this PCE may vary in some degrees.

Corresponding to the second application scenario in Embodiment 4, the transmitter 72 is further configured to send a path establishment message to a lower-layer PCE, where the path establishment message includes the identifier of the first node of the lower-layer path and the identifier of the last node of the lower-layer path that are determined by the processor 71, and the bandwidth requirement.

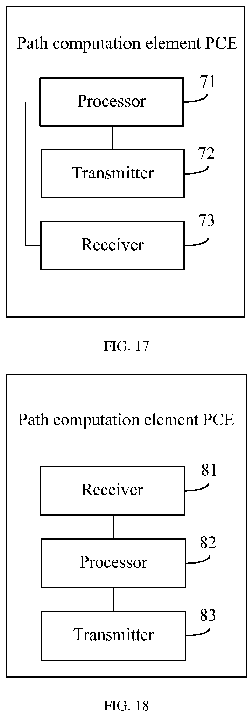

Corresponding to the second application scenario in Embodiment 4, as shown in FIG. 17, this PCE further includes: a receiver 73.

The receiver 73 is configured to receive a path indication message from the lower-layer PCE, where the path indication message includes the identifier of the established lower-layer path that matches the identifier of the first node of the lower-layer path, the identifier of the last node of the lower-layer path, and the bandwidth requirement. Corresponding to the first application scenario in Embodiment 4, as shown in FIG. 17, this PCE further includes: a receiver 73.

The receiver 73 is configured to: before the processor 71 acquires the identifier of the established lower-layer path that matches the identifier of the first node of the lower-layer path, the identifier of the last node of the lower-layer path, and the bandwidth requirement, receive first connection information from a lower-layer PCE, where the first connection information includes planning information of a planned lower-layer path on a network on which the lower-layer PCE is located, where the planned lower-layer path includes: the established lower-layer path and a lower-layer path that has been planned but not yet established.

The planning information includes at least the identifier of the lower-layer path, the identifier of the first node of the lower-layer path, the identifier of the last node of the lower-layer path, and bandwidth information of the lower-layer path.

Corresponding to the first situation of the first application scenario in Embodiment 4, the processor 71 is further configured to acquire an identifier, which is in the first connection information, of a lower-layer path that matches the identifier of the first node of the lower-layer path, the identifier of the last node of the lower-layer path, and the bandwidth requirement.

Corresponding to the first situation of the first application scenario in Embodiment 4, the transmitter 72 is further configured to send a path establishment message to the lower-layer PCE, where the path establishment message includes the identifier, which is acquired by the processor 71, of the lower-layer path.

Corresponding to the first situation of the first application scenario in Embodiment 4, the receiver 73 is further configured to receive a path indication message from the lower-layer PCE, where the path indication message includes an identifier of an established lower-layer path that matches the identifier, which is acquired by the processor 71, of the lower-layer path.

Corresponding to the second situation of the first application scenario in Embodiment 4, the planning information further includes: status information of the lower-layer path, where the status information of the lower-layer path is used to indicate that the lower-layer path has been established or the lower-layer path has been planned but not yet established.

Corresponding to the second situation of the first application scenario in Embodiment 4, the receiver 73 is further configured to: before the processor 71 acquires the identifier of the established lower-layer path that matches the identifier of the first node of the lower-layer path, the identifier of the last node of the lower-layer path, and the bandwidth requirement, receive second connection information from the lower-layer PCE, where the second connection information includes at least an identifier of a lower-layer path whose status information changes, and status update information of the lower-layer path whose status information changes.

Corresponding to the second situation of the first application scenario in Embodiment 4, the processor 71 is further configured to update, according to the identifier of the lower-layer path whose status information changes and by using the status update information, the status information of the lower-layer path whose status information changes. Corresponding to the second situation of the first application scenario in Embodiment 4, the processor 71 is further configured to acquire an identifier, which is in the first connection information, of a lower-layer path that matches the identifier of the first node of the lower-layer path, the identifier of the last node of the lower-layer path, and the bandwidth requirement; and search the acquired identifier of the lower-layer path for the identifier of the established lower-layer path according to status information of the lower-layer path corresponding to the acquired identifier of the lower-layer path.

In either of the foregoing scenarios, the receiver 73 is further configured to receive bandwidth change information, which is in the planning information from the lower-layer PCE, of the lower-layer path, where the bandwidth change information is used to represent a service bearing status of the lower-layer path.

The processor 71 is configured to update the bandwidth information of the lower-layer path according to the bandwidth change information received by the receiver 73.

It should be noted that, for specific descriptions of some functional modules in the PCE that is provided by this embodiment, reference may be made to corresponding content in the method embodiments, and details are not described herein again in this embodiment.

Compared with the prior art in which there is a problem that a bottom-layer path may already be occupied by another service or has inadequate bandwidth due to a delay in a process from computing a path by a lower-layer PCE to completing establishment of a path crossing an upper layer and a lower layer, which further leads to a subsequent unsuccessful path establishment or causes the established path to fail to meet a bandwidth requirement, in the solution of the PCE provided in this embodiment, a lower-layer path acquired by the PCE is an established bottom-layer path that is used to carry upper-layer service data, and when establishing a complete path subsequently, an upper-layer first node no longer needs to establish a bottom-layer path, and therefore a case in which the bottom-layer path is occupied by another service does not occur; the lower-layer path acquired by an upper layer is a path that meets a bandwidth requirement, and therefore a case of inadequate bandwidth does not occur; and in this way, a path establishment success rate of the upper-layer first node can be increased.

### Embodiment 9

This embodiment provides a PCE. As shown in FIG. 18, the PCE may include: a receiver 81, a processor 82, and a transmitter 83.

The receiver 81 is configured to receive a path establishment message from an upper-layer PCE, where the path establishment message is used to instruct a lower-layer first node to establish a lower-layer path that is used as a bottom-layer path of a to-be-established LSP, to carry upper-layer service data; and the path establishment message includes: an identifier of a first node of the lower-layer path, an identifier of a last node of the lower-layer path, and a bandwidth requirement.

The processor 82 is configured to: if a lower-layer path that matches the identifier of the first node of the lower-layer path, the identifier of the last node of the lower-layer path, and the bandwidth requirement that are in the path establishment message received by the receiver 81 has not been established, establish the lower-layer path that matches the identifier of the first node of the lower-layer path, the identifier of the last node of the lower-layer path, and the bandwidth requirement.

The transmitter 83 is configured to send, to the upper-layer PCE, a path indication message that includes an identifier of the lower-layer path established by the processor 82; or if a lower-layer path that matches the identifier of the first node of the lower-layer path, the identifier of the last node of the lower-layer path, and the bandwidth requirement that are in the path establishment message received by the receiver 81 has been established, send, to the upper-layer PCE, a path indication message that includes an identifier of the established lower-layer path, so that the upper-layer PCE sends, to an upper-layer first node, a path establishment indication that includes the identifier, which is in the path indication message, of the established lower-layer path, and the upper-layer first node establishes the to-be-established LSP.

It should be noted that, for specific descriptions of some functional modules in the PCE that is provided by this embodiment, reference may be made to corresponding content in the method embodiments, and details are not described herein again in this embodiment.

The PCE provided in this embodiment may receive a path establishment message from an upper-layer PCE; and if a lower-layer path that matches an identifier of a first node of a lower-layer path, an identifier of a last node of the lower-layer path, and a bandwidth requirement that are in the path establishment message has been established, send, to the upper-layer PCE, a path indication message that includes an identifier of the established lower-layer path; or if a lower-layer path that matches an identifier of a first node of a lower-layer path, an identifier of a last node of the lower-layer path, and a bandwidth requirement that are in the path establishment message has not been established, establish the lower-layer path that matches the identifier of the first node of the lower-layer path, the identifier of the last node of the lower-layer path, and the bandwidth requirement, and send, to the upper-layer PCE, a path indication message that includes an identifier of the established lower-layer path, so that the upper-layer PCE sends, to an upper-layer first node, a path establishment indication that includes the identifier, which is in the path indication message, of the established lower-layer path, and the upper-layer first node establishes a to-be-established LSP.

Compared with the prior art in which there is a problem that a bottom-layer path may already be occupied by another service or has inadequate bandwidth due to a delay in a process from computing a path by a local PCE to completing establishment of a path crossing an upper layer and a lower layer, which further leads to a subsequent unsuccessful path establishment or causes the established path to fail to meet a bandwidth requirement, in this solution, after receiving a path establishment message from an upper-layer PCE, a PCE may send, to the upper-layer PCE, a path indication message that includes an identifier of an established lower-layer path. Because a lower-layer path indicated by the identifier, which is received by the upper-layer PCE, of the lower-layer path is an established bottom-layer path that is used to carry upper-layer service data, when establishing a complete path subsequently, an upper-layer first node no longer needs to establish a bottom-layer path, and therefore a case in which the bottom-layer path is occupied by another service does not occur; the lower-layer path acquired by an upper layer is a path that meets a bandwidth requirement, and therefore a case of inadequate bandwidth does not occur; and in this way, a path establishment success rate of the upper-layer first node can be increased.

### Embodiment 10

This embodiment provides a PCE. As shown in FIG. 18, the PCE may include: a receiver 81, a processor 82, and a transmitter 83.

The receiver 81 is configured to receive a path establishment message from an upper-layer PCE, where the path establishment message is used to instruct a lower-layer first node to establish a lower-layer path that is used as a bottom-layer path of a to-be-established LSP, to carry upper-layer service data; and the path establishment message includes: an identifier of the lower-layer path.

The processor 82 is configured to: if a lower-layer path that matches the identifier, which is in the path establishment message received by the receiver 81, of the lower-layer path has not been established, establish the lower-layer path that matches the identifier of the lower-layer path.

The transmitter 83 is configured to send, to the upper-layer PCE, a path indication message that includes an identifier of the lower-layer path established by the processor 82; or if a lower-layer path that matches the identifier, which is in the path establishment message received by the receiver 81, of the lower-layer path has been established, send, to the upper-layer PCE, a path indication message that includes an identifier of the established lower-layer path, so that the upper-layer PCE sends, to an upper-layer first node, a path establishment indication that includes the identifier, which is in the path indication message, of the established lower-layer path, and the upper-layer first node establishes the to-be-established LSP.

Optionally, corresponding to different application scenarios in Embodiment 4, this PCE may vary in some degrees.

Corresponding to the first application scenario in Embodiment 4, the transmitter 83 is further configured to: before the receiver 71 receives the path establishment message from the upper-layer PCE, send first connection information to the upper-layer PCE, where the first connection information includes planning information of a planned lower-layer path on a network on which this PCE is located, where the planned lower-layer path includes: the established lower-layer path and a lower-layer path that has been planned but not yet established.

The planning information includes at least an identifier of the planned lower-layer path, the identifier of the first node of the lower-layer path, the identifier of the last node of the lower-layer path, and bandwidth information of the lower-layer path.

Corresponding to the second situation of the first application scenario in Embodiment 4, the planning information further includes: status information of the lower-layer path, where the status information of the lower-layer path is used to indicate that the lower-layer path has been established or the lower-layer path has been planned but not yet established.

Corresponding to the second situation of the first application scenario in Embodiment 4, the transmitter 83 is further configured to send second connection information to the upper-layer PCE, where the second connection information includes at least an identifier of a lower-layer path whose status information changes, and status update information of the lower-layer path whose status information changes, where the status update information is used for updating, by the upper-layer PCE according to the identifier of the lower-layer path whose status information changes, the status information of the lower-layer path whose status information changes.

In either of the foregoing scenarios, the processor 82 is further configured to acquire bandwidth change information, which is in the planning information, of the lower-layer path, where the bandwidth change information is used to represent a service bearing status of the lower-layer path.

In either of the foregoing scenarios, the transmitter 83 is further configured to send the bandwidth change information acquired by the processor 82 to the upper-layer PCE, so that the upper-layer PCE updates the bandwidth information of the lower-layer path according to the bandwidth change information.

It should be noted that, for specific descriptions of some functional modules in the PCE that is provided by this embodiment, reference may be made to corresponding content in the method embodiments, and details are not described herein again in this embodiment.

The PCE provided in this embodiment may receive a path establishment message from an upper-layer PCE; and if a lower-layer path that matches an identifier, which is in the path establishment message, of a lower-layer path has been established, send, to the upper-layer PCE, a path indication message that includes an identifier of the established lower-layer path; or if a lower-layer path that matches an identifier, which is in the path establishment message, of a lower-layer path has not been established, establish the lower-layer path that matches the identifier of the lower-layer path, and send, to the upper-layer PCE, a path indication message that includes an identifier of the established lower-layer path, so that the upper-layer PCE sends, to an upper-layer first node, a path establishment indication that includes the identifier, which is in the path indication message, of the established lower-layer path, and the upper-layer first node establishes a to-be-established LSP.

Compared with the prior art in which there is a problem that a bottom-layer path may already be occupied by another service or has inadequate bandwidth due to a delay in a process from computing a path by a local PCE to completing establishment of a path crossing an upper layer and a lower layer, which further leads to a subsequent unsuccessful path establishment or causes the established path to fail to meet a bandwidth requirement, in this solution, after receiving a path establishment message from an upper-layer PCE, a PCE may send, to the upper-layer PCE, a path indication message that includes an identifier of an established lower-layer path. Because a lower-layer path indicated by the identifier, which is received by the upper-layer PCE, of the lower-layer path is an established bottom-layer path that is used to carry upper-layer service data, when establishing a complete path subsequently, an upper-layer first node no longer needs to establish a bottom-layer path, and therefore a case in which the bottom-layer path is occupied by another service does not occur; the lower-layer path acquired by an upper layer is a path that meets a bandwidth requirement, and therefore a case of inadequate bandwidth does not occur; and in this way, a path establishment success rate of the upper-layer first node can be increased.

The foregoing descriptions about implementation manners allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or part of the functions described above. For a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A cross-layer path establishment method, comprising:
determining (S101) by an upper-layer path computation element, PCE, upper-layer path information of a to-be-established label switched path, LSP, an identifier of a first node of a lower-layer path, and an identifier of a last node of the lower-layer path according to an identifier of an upper-layer first node, an identifier of an upper-layer last node, and a bandwidth requirement of the to-be-established LSP, wherein the upper-layer path information comprises an identifier of an upper-layer node that the to-be-established LSP passes through, and the lower-layer path is used as a bottom-layer path of the to-be-established LSP, to carry upper-layer service data;
acquiring (S102) an identifier of an established lower-layer path that matches the identifier of the first node of the lower-layer path, the identifier of the last node of the lower-layer path, and the bandwidth requirement; and
sending (S103) to the upper-layer first node, a path establishment indication that comprises the upper-layer path information and the identifier of the lower-layer path, so that the upper-layer first node establishes the to-be-established LSP according to the upper-layer path information and the identifier of the lower-layer path.

2. The method according to claim 1, wherein the acquiring an identifier of an established lower-layer path that matches the identifier of the first node of the lower-layer path, the identifier of the last node of the lower-layer path, and the bandwidth requirement comprises:
sending a path establishment message to a lower-layer PCE, wherein the path establishment message comprises the identifier of the first node of the lower-layer path, the identifier of the last node of the lower-layer path, and the bandwidth requirement; and
receiving a path indication message from the lower-layer PCE, wherein the path indication message comprises the identifier of the established lower-layer path that matches the identifier of the first node of the lower-layer path, the identifier of the last node of the lower-layer path, and the bandwidth requirement.

3. The method according to claim 1, wherein before the acquiring an identifier of an established lower-layer path that matches the identifier of the first node of the lower-layer path, the identifier of the last node of the lower-layer path, and the bandwidth requirement, the method further comprises:
receiving first connection information from a lower-layer PCE, wherein the first connection information comprises planning information of a planned lower-layer path on a network on which the lower-layer PCE is located, wherein the planned lower-layer path comprises: the established lower-layer path and a lower-layer path that has been planned but not yet established; and
the planning information comprises at least the identifier of the lower-layer path, the identifier of the first node of the lower-layer path, the identifier of the last node of the lower-layer path, and bandwidth information of the lower-layer path.

4. The method according to claim 3, wherein the acquiring an identifier of an established lower-layer path that matches the identifier of the first node of the lower-layer path, the identifier of the last node of the lower-layer path, and the bandwidth requirement comprises:
acquiring an identifier, which is in the first connection information, of a lower-layer path that matches the identifier of the first node of the lower-layer path, the identifier of the last node of the lower-layer path, and the bandwidth requirement;
sending a path establishment message to the lower-layer PCE, wherein the path establishment message comprises the acquired identifier of the lower-layer path; and
receiving a path indication message from the lower-layer PCE, wherein the path indication message comprises an identifier of an established lower-layer path that matches the acquired identifier of the lower-layer path.

5. A cross-layer path establishment method, comprising:
receiving (S301) by a lower-layer path computation element, PCE, a path establishment message from an upper-layer PCE, wherein the path establishment message is used to instruct (S303) a lower-layer first node to establish a lower-layer path that is used as a bottom-layer path of a to-be-established label switched path, LSP, to carry upper-layer service data; and the path establishment message comprises: an identifier of the lower-layer path; and
if a lower-layer path that matches the identifier, which is in the path establishment message, of the lower-layer path has been established (S302), sending (S304), to the upper-layer PCE, a path indication message that comprises an identifier of the established lower-layer path, so that the upper-layer PCE sends, to an upper-layer first node, a path establishment indication that comprises the identifier, which is in the path indication message, of the established lower-layer path, and the upper-layer first node establishes the to-be-established LSP; or
if a lower-layer path that matches the identifier, which is in the path establishment message, of the lower-layer path has not been established, establishing the lower-layer path that matches the identifier of the lower-layer path, and sending, to the upper-layer PCE, a path indication message that comprises an identifier of the established lower-layer path, so that the upper-layer PCE sends, to an upper-layer first node, a path establishment indication that comprises the identifier, which is in the path indication message, of the established lower-layer path, and the upper-layer first node establishes the to-be-established LSP.

6. The method according to claim 5, wherein before the receiving, by a lower-layer PCE, a path establishment message from an upper-layer PCE, the method further comprises:
sending first connection information to the upper-layer PCE, wherein the first connection information comprises planning information of a planned lower-layer path on a network on which the lower-layer PCE is located, wherein the planned lower-layer path comprises: the established lower-layer path and a lower-layer path that has been planned but not yet established, wherein
the planning information comprises at least an identifier of the planned lower-layer path, an identifier of a first node of the lower-layer path, an identifier of a last node of the lower-layer path, and bandwidth information of the lower-layer path.

7. The method according to claim 6, wherein the planning information further comprises: status information of the lower-layer path, wherein the status information of the lower-layer path is used to indicate that the lower-layer path has been established or the lower-layer path has been planned but not yet established.

8. The method according to claim 7, wherein the method further comprises:
sending second connection information to the upper-layer PCE, wherein the second connection information comprises at least an identifier of a lower-layer path whose status information changes, and status update information of the lower-layer path whose status information changes, wherein the status update information is used for updating, by the upper-layer PCE according to the identifier of the lower-layer path whose status information changes, the status information of the lower-layer path whose status information changes.

9. A path computation element, PCE, comprising:
a determining unit (51), configured to determine upper-layer path information of a to-be-established label switched path, LSP, an identifier of a first node of a lower-layer path, and an identifier of a last node of the lower-layer path according to an identifier of an upper-layer first node, an identifier of an upper-layer last node, and a bandwidth requirement of the to-be-established LSP, wherein the upper-layer path information comprises an identifier of an upper-layer node that the to-be-established LSP passes through, and the lower-layer path is used as a bottom-layer path of the to-be-established LSP, to carry upper-layer service data;
an acquiring unit (52), configured to acquire an identifier of an established lower-layer path that matches the identifier of the first node of the lower-layer path and the identifier of the last node of the lower-layer path that are determined by the determining unit, and the bandwidth requirement; and
a sending unit (53), configured to send, to the upper-layer first node, a path establishment indication that comprises the upper-layer path information and the identifier of the lower-layer path that are acquired by the acquiring unit, so that the upper-layer first node establishes the to-be-established LSP according to the upper-layer path information and the identifier of the lower-layer path.

10. The PCE according to claim 9, wherein the acquiring unit (52) comprises:
a first sending subunit (521), configured to send a path establishment message to a lower-layer PCE, wherein the path establishment message comprises the identifier of the first node of the lower-layer path and the identifier of the last node of the lower-layer path that are determined by the determining unit, and the bandwidth requirement; and
a first receiving subunit (522), configured to receive a path indication message from the lower-layer PCE, wherein the path indication message comprises the identifier of the established lower-layer path that matches the identifier of the first node of the lower-layer path, the identifier of the last node of the lower-layer path, and the bandwidth requirement that are in the path establishment message sent by the first sending subunit.

11. The PCE according to claim 9, wherein the PCE further comprises:
a receiving unit (54), configured to: before the acquiring unit acquires the identifier of the established lower-layer path that matches the identifier of the first node of the lower-layer path, the identifier of the last node of the lower-layer path, and the bandwidth requirement, receive first connection information from a lower-layer PCE, wherein the first connection information comprises planning information of a planned lower-layer path on a network on which the lower-layer PCE is located, wherein the planned lower-layer path comprises: the established lower-layer path and a lower-layer path that has been planned but not yet established; and
the planning information comprises at least the identifier of the lower-layer path, the identifier of the first node of the lower-layer path, the identifier of the last node of the lower-layer path, and bandwidth information of the lower-layer path.

12. The PCE according to claim 11, wherein the acquiring unit (52)comprises:
a first acquiring subunit (523), configured to acquire an identifier, which is in the first connection information received by the receiving unit, of a lower-layer path that matches the identifier of the first node of the lower-layer path, the identifier of the last node of the lower-layer path, and the bandwidth requirement;
a second sending subunit (521), configured to send a path establishment message to the lower-layer PCE, wherein the path establishment message comprises the identifier, which is acquired by the first acquiring subunit, of the lower-layer path; and
a second receiving subunit (522), configured to receive a path indication message from the lower-layer PCE, wherein the path indication message comprises an identifier of an established lower-layer path that corresponds to the identifier, which is acquired by the first acquiring subunit, of the lower-layer path.

13. A path computation element, PCE, comprising:
a receiving unit (61), configured to receive a path establishment message from an upper-layer PCE, wherein the path establishment message is used to instruct a lower-layer first node to establish a lower-layer path that is used as a bottom-layer path of a to-be-established label switched path, LSP, to carry upper-layer service data; and the path establishment message comprises: an identifier of the lower-layer path;
an establishment unit (62), configured to: if a lower-layer path that matches the identifier, which is in the path establishment message received by the receiving unit, of the lower-layer path has not been established, establish the lower-layer path that matches the identifier of the lower-layer path; and
a sending unit (63), configured to send, to the upper-layer PCE, a path indication message that comprises an identifier of the lower-layer path established by the establishment unit; or if a lower-layer path that matches the identifier, which is in the path establishment message received by the receiving unit, of the lower-layer path has been established, send, to the upper-layer PCE, a path indication message that comprises an identifier of the established lower-layer path, so that the upper-layer PCE sends, to an upper-layer first node, a path establishment indication that comprises the identifier, which is in the path indication message, of the established lower-layer path, and the upper-layer first node establishes the to-be-established LSP.

14. The PCE according to claim 13, wherein the sending unit is further configured to: before the receiving unit receives the path establishment message from the upper-layer PCE, send first connection information to the upper-layer PCE, wherein the first connection information comprises planning information of a planned lower-layer path on a network on which this PCE is located, wherein the planned lower-layer path comprises: the established lower-layer path and a lower-layer path that has been planned but not yet established; and
the planning information comprises at least an identifier of the planned lower-layer path, an identifier of a first node of the lower-layer path, an identifier of a last node of the lower-layer path, and bandwidth information of the lower-layer path.

15. The PCE according to claim 14, wherein the planning information further comprises: status information of the lower-layer path, wherein the status information of the lower-layer path is used to indicate that the lower-layer path has been established or the lower-layer path has been planned but not yet established.

## Patentansprüche

1. Verfahren zur schichtüberkreuzenden Pfadherstellung, umfassend:
Bestimmen (S101), durch ein Pfadberechnungselement (Path Computation Element, PCE) der oberen Schicht, einer Pfadinformation der oberen Schicht eines herzustellenden Label-Switch-Pfads (LSP), einer Kennung eines ersten Knotens eines Pfads der unteren Schicht und einer Kennung eines letzten Knotens des Pfads der unteren Schicht gemäß einer Kennung eines ersten Knotens der oberen Schicht, einer Kennung eines letzten Knotens der oberen Schicht und einer Bandbreitenanforderung des herzustellenden LSP, wobei die Pfadinformation der oberen Schicht eine Kennung eines Knotens der oberen Schicht umfasst, den der herzustellende LSP durchläuft, und der Pfad der unteren Schicht als Pfad der untersten Schicht des herzustellenden LSP verwendet wird, um die Dienstdaten der oberen Schicht zu transportieren;
Erfassen (S102) einer Kennung eines hergestellten Pfads der unteren Schicht, die mit der Kennung des ersten Knotens des Pfads der unteren Schicht, der Kennung des letzten Knotens des Pfads der unteren Schicht und der Bandbreitenanforderung übereinstimmt; und
Senden (S103), an den ersten Knoten der oberen Schicht, einer Pfadherstellungsangabe, die die Pfadinformation der oberen Schicht und die Kennung des Pfads der unteren Schicht umfasst, sodass der erste Knoten der oberen Schicht den herzustellenden LSP gemäß der Pfadinformation der oberen Schicht und der Kennung des Pfads der unteren Schicht herstellt.

2. Verfahren nach Anspruch 1, wobei das Erfassen einer Kennung eines hergestellten Pfads der unteren Schicht, die mit der Kennung des ersten Knotens des Pfads der unteren Schicht, der Kennung des letzten Knotens des Pfads der unteren Schicht und der Bandbreitenanforderung übereinstimmt, umfasst:
Senden einer Pfadherstellungsnachricht an ein PCE der unteren Schicht, wobei die Pfadherstellungsnachricht die Kennung des ersten Knotens des Pfads der unteren Schicht, die Kennung des letzten Knotens des Pfads der unteren Schicht und die Bandbreitenanforderung umfasst; und
Empfangen einer Pfadangabenachricht von dem PCE der unteren Schicht, wobei die Pfadangabenachricht die Kennung des hergestellten Pfads der unteren Schicht umfasst, die mit der Kennung des ersten Knotens des Pfads der unteren Schicht, der Kennung des letzten Knotens des Pfads der unteren Schicht und der Bandbreitenanforderung übereinstimmt.

3. Verfahren nach Anspruch 1, wobei vor dem Erfassen einer Kennung eines hergestellten Pfads der unteren Schicht, die mit der Kennung des ersten Knotens des Pfads der unteren Schicht, der Kennung des letzten Knotens des Pfads der unteren Schicht und der Bandbreitenanforderung übereinstimmt, das Verfahren ferner umfasst:
Empfangen einer ersten Verbindungsinformation von einem PCE der unteren Schicht, wobei die erste Verbindungsinformation eine Planungsinformation eines geplanten Pfads der unteren Schicht in einem Netzwerk umfasst, auf dem sich das PCE der unteren Schicht befindet, wobei der geplante Pfad der unteren Schicht umfasst: den hergestellten Pfad der unteren Schicht und einen Pfad der unteren Schicht, der geplant, aber noch nicht hergestellt wurde; und
die Planungsinformation mindestens die Kennung des Pfads der unteren Schicht, die Kennung des ersten Knotens des Pfads der unteren Schicht, die Kennung des letzten Knotens des Pfads der unteren Schicht und die Bandbreiteninformation des Pfads der unteren Schicht umfasst.

4. Verfahren nach Anspruch 3, wobei das Erfassen einer Kennung eines hergestellten Pfads der unteren Schicht, die mit der Kennung des ersten Knotens des Pfads der unteren Schicht, der Kennung des letzten Knotens des Pfads der unteren Schicht und der Bandbreitenanforderung übereinstimmt, umfasst:
Erfassen einer in der ersten Verbindungsinformation befindlichen Kennung eines Pfads der unteren Schicht, die mit der Kennung des ersten Knotens des Pfads der unteren Schicht, der Kennung des letzten Knotens des Pfads der unteren Schicht und der Bandbreitenanforderung übereinstimmt;
Senden einer Pfadherstellungsnachricht an das PCE der unteren Schicht, wobei die Pfadherstellungsnachricht die erfasste Kennung des Pfads der unteren Schicht umfasst; und
Empfangen einer Pfadangabenachricht von dem PCE der unteren Schicht, wobei die Pfadangabenachricht eine Kennung eines hergestellten Pfads der unteren Schicht umfasst, die mit der erfassten Kennung des Pfads der unteren Schicht übereinstimmt.

5. Verfahren zur schichtüberkreuzenden Pfadherstellung, umfassend:
Empfangen (S301), durch ein Pfadberechnungselement (Path Computation Element, PCE) der unteren Schicht einer Pfadherstellungsnachricht von einem PCE der oberen Schicht, wobei die Pfadherstellungsnachricht verwendet wird, um einen ersten Knoten der unteren Schicht anzuweisen (S303), einen Pfad der unteren Schicht herzustellen, der als ein Pfad der untersten Schicht eines herzustellenden Label-Switch-Pfads (LSP) verwendet wird, um die Dienstdaten der oberen Schicht zu transportieren; und die Pfadherstellungsnachricht umfasst: eine Kennung des Pfads der unteren Schicht; und
wenn ein Pfad der unteren Schicht, der mit einer in der ersten Pfadherstellungsnachricht befindlichen Kennung des Pfads der unteren Schicht übereinstimmt, hergestellt wurde (S302), Senden (S304), an das PCE der oberen Schicht, einer Pfadangabenachricht, die eine Kennung des hergestellten Pfads der unteren Schicht umfasst, sodass das PCE der oberen Schicht, an einen ersten Knoten der oberen Schicht, eine Pfadherstellungsangabe sendet, welche die in der Pfadangabenachricht befindliche Kennung des hergestellten Pfads der unteren Schicht umfasst, und der erste Knoten der oberen Schicht den herzustellenden LSP herstellt; oder
wenn ein Pfad der unteren Schicht, der mit einer in der ersten Pfadherstellungsnachricht befindlichen Kennung des Pfads der unteren Schicht übereinstimmt, nicht hergestellt wurde, Herstellen des Pfads der unteren Schicht, der mit der Kennung des Pfads der unteren Schicht übereinstimmt, und Senden, an das PCE der oberen Schicht, einer Pfadangabenachricht, die eine Kennung des hergestellten Pfads der unteren Schicht umfasst, sodass das PCE der oberen Schicht, an einen ersten Knoten der oberen Schicht, eine Pfadherstellungsangabe sendet, welche die sich in der Pfadangabenachricht befindliche Kennung des hergestellten Pfads der unteren Schicht umfasst, und der erste Knoten der oberen Schicht den herzustellenden LSP herstellt.

6. Verfahren nach Anspruch 5, wobei vor dem Empfangen, von einem PCE der unteren Schicht, einer Pfadherstellungsnachricht von einem PCE der oberen Schicht, das Verfahren ferner umfasst:
Senden einer ersten Verbindungsinformation von einem PCE der oberen Schicht, wobei die erste Verbindungsinformation eine Planungsinformation eines geplanten Pfads der unteren Schicht in einem Netzwerk umfasst, auf dem sich das PCE der unteren Schicht befindet, wobei der geplante Pfad der unteren Schicht umfasst: den hergestellten Pfad der unteren Schicht und einen Pfad der unteren Schicht, der geplant, aber noch nicht hergestellt wurde, wobei
die Planungsinformation mindestens eine Kennung des geplanten Pfads der unteren Schicht, eine Kennung eines ersten Knotens des Pfads der unteren Schicht, eine Kennung eines letzten Knotens des Pfads der unteren Schicht und die Bandbreiteninformation des Pfads der unteren Schicht umfasst.

7. Verfahren nach Anspruch 6, wobei die Planungsinformation ferner umfasst: eine Statusinformation des Pfads der unteren Schicht, wobei die Statusinformation des Pfads der unteren Schicht verwendet wird, um anzugeben, dass der Pfad der unteren Schicht hergestellt wurde oder der Pfad der unteren Schicht geplant, aber noch nicht hergestellt wurde.

8. Verfahren nach Anspruch 7, wobei das Verfahren ferner umfasst:
Senden einer zweiten Verbindungsinformation an das PCE der oberen Schicht, wobei die zweite Verbindungsinformation mindestens eine Kennung eines Pfads der unteren Schicht, dessen Statusinformation sich ändert, und eine Statusaktualisierungsinformation des Pfads der unteren Schicht umfasst, dessen Statusinformation sich ändert, wobei die Statusaktualisierungsinformation verwendet wird, um durch das PCE der oberen Schicht gemäß der Kennung des Pfads der unteren Schicht, dessen Statusinformation sich ändert, die Statusinformation des Pfads der unteren Schicht zu aktualisieren, dessen Statusinformation sich ändert.

9. Pfadberechnungselement (Path Computation Element, PCE), umfassend:
eine Bestimmungseinheit (51), die konfiguriert ist, um eine Pfadinformation der oberen Schicht eines herzustellenden Label-Switch-Pfads (LSP), eine Kennung eines ersten Knotens eines Pfads der unteren Schicht und eine Kennung eines letzten Knotens des Pfads der unteren Schicht gemäß einer Kennung eines ersten Knotens der oberen Schicht, einer Kennung eines letzten Knotens der oberen Schicht und einer Bandbreitenanforderung des herzustellenden LSP zu bestimmen,
wobei die Pfadinformation der oberen Schicht eine Kennung eines Knotens der oberen Schicht umfasst, den der herzustellende LSP durchläuft, und der Pfad der unteren Schicht als Pfad der untersten Schicht des herzustellenden LSP verwendet wird, um die Dienstdaten der oberen Schicht zu transportieren; eine Erfassungseinheit (52), die konfiguriert ist, um eine Kennung eines hergestellten Pfads der unteren Schicht zu erfassen, die mit der Kennung des ersten Knotens des Pfads der unteren Schicht, der Kennung des letzten Knotens des Pfads der unteren Schicht, welche von der Bestimmungseinheit bestimmt werden, und der Bandbreitenanforderung übereinstimmt; und
eine Sendeeinheit (53), die konfiguriert ist, um, an den ersten Knoten der oberen Schicht, eine Pfadherstellungsangabe zu senden, die die Pfadinformation der oberen Schicht und die Kennung des Pfads der unteren Schicht umfasst, welche von der Erfassungseinheit erfasst werden, sodass der erste Knoten der oberen Schicht den herzustellenden LSP gemäß der Pfadinformation der oberen Schicht und der Kennung des Pfads der unteren Schicht herstellt.

10. PCE nach Anspruch 9, wobei die Erfassungseinheit (52) umfasst:
eine erste Sendeuntereinheit (521), die konfiguriert ist, um eine Pfadherstellungsnachricht an ein PCE der unteren Schicht zu senden, wobei die Pfadherstellungsnachricht die Kennung des ersten Knotens des Pfads der unteren Schicht und die Kennung des letzten Knotens des Pfads der unteren Schicht, welche von der Bestimmungseinheit bestimmt werden, und die Bandbreitenanforderung umfasst; und
eine erste Empfangsuntereinheit (522), die konfiguriert ist, um eine Pfadangabenachricht von dem PCE der unteren Schicht zu empfangen, wobei die Pfadangabenachricht die Kennung des hergestellten Pfads der unteren Schicht umfasst, die mit der Kennung des ersten Knotens des Pfads der unteren Schicht, der Kennung des letzten Knotens des Pfads der unteren Schicht und der Bandbreitenanforderung übereinstimmt, die in der Pfadherstellungsnachricht befindlich sind, die von der ersten Sendeuntereinheit gesendet wird.

11. PCE nach Anspruch 9, wobei das PCE ferner umfasst:
eine Empfangseinheit (54), die konfiguriert ist, um: bevor die Erfassungseinheit die Kennung des hergestellten Pfads der unteren Schicht erfasst, die mit der Kennung des ersten Knotens des Pfads der unteren Schicht, der Kennung des letzten Knotens des Pfads der unteren Schicht und der Bandbreitenanforderung übereinstimmt, eine erste Verbindungsinformation von einem PCE der unteren Schicht zu empfangen, wobei die erste Verbindungsinformation eine Planungsinformation eines geplanten Pfads der unteren Schicht in einem Netzwerk umfasst, auf dem sich das PCE der unteren Schicht befindet, wobei der geplante Pfad der unteren Schicht umfasst: den hergestellten Pfad der unteren Schicht und einen Pfad der unteren Schicht, der geplant, aber noch nicht hergestellt wurde; und
die Planungsinformation mindestens die Kennung des Pfads der unteren Schicht, die Kennung des ersten Knotens des Pfads der unteren Schicht, die Kennung des letzten Knotens des Pfads der unteren Schicht und die Bandbreiteninformation des Pfads der unteren Schicht umfasst.

12. PCE nach Anspruch 11, wobei die Erfassungseinheit (52) umfasst:
eine erste Erfassungsuntereinheit (523), die konfiguriert ist, um eine in der von der Empfangseinheit empfangenen ersten Verbindungsinformation befindliche Kennung eines Pfads der unteren Schicht zu erfassen, die mit der Kennung des ersten Knotens des Pfads der unteren Schicht, der Kennung des letzten Knotens des Pfads der unteren Schicht und der Bandbreitenanforderung übereinstimmt;
eine zweite Sendeuntereinheit (521), die konfiguriert ist, um eine Pfadherstellungsnachricht an das PCE der unteren Schicht zu senden, wobei die Pfadherstellungsnachricht die durch die erste Erfassungsuntereinheit erfasste Kennung des Pfads der unteren Schicht umfasst; und
eine zweite Empfangsuntereinheit (522), die konfiguriert ist, um eine Pfadangabenachricht von dem PCE der unteren Schicht zu empfangen, wobei die Pfadangabenachricht eine Kennung eines hergestellten Pfads der unteren Schicht umfasst, die der durch die erste Erfassungsuntereinheit erfassten Kennung des Pfads der unteren Schicht entspricht.

13. Pfadberechnungselement (Path Computation Element, PCE), umfassend:
eine Empfangseinheit (61), die konfiguriert ist, um eine Pfadherstellungsnachricht von einem PCE der oberen Schicht zu empfangen, wobei die Pfadherstellungsnachricht verwendet wird, um einen ersten Knoten der unteren Schicht anzuweisen, einen Pfad der unteren Schicht herzustellen, der als ein Pfad der untersten Schicht eines herzustellenden Label-Switch-Pfads (LSP) verwendet wird, um die Dienstdaten der oberen Schicht zu transportieren; und die Pfadherstellungsnachricht umfasst: eine Kennung des Pfads der unteren Schicht;
eine Herstellungseinheit (62), die konfiguriert ist, um: wenn ein Pfad der unteren Schicht, der mit einer in der von der Empfangseinheit empfangenen Pfadherstellungsnachricht befindlichen Kennung des Pfads der unteren Schicht übereinstimmt, nicht hergestellt wurde, den Pfad der unteren Schicht, der mit der Kennung des Pfads der unteren Schicht übereinstimmt, herzustellen; und
eine Sendeeinheit (63), die konfiguriert ist, um, an das PCE der oberen Schicht, eine Pfadangabenachricht zu senden, die eine Kennung des Pfads der unteren Schicht umfasst, der von der Herstellungseinheit hergestellt wurde; oder, wenn ein Pfad der unteren Schicht, der mit einer in der von der Empfangseinheit empfangenen Pfadherstellungsnachricht befindlichen Kennung des Pfads der unteren Schicht übereinstimmt, hergestellt wurde, an das PCE der oberen Schicht eine Pfadangabenachricht zu senden, die eine Kennung des hergestellten Pfads der unteren Schicht umfasst, sodass das PCE der oberen Schicht, an einen ersten Knoten der oberen Schicht, eine Pfadherstellungsangabe sendet, welche die sich in der Pfadherstellungsnachricht befindliche Kennung des hergestellten Pfads der unteren Schicht umfasst, und der erste Knoten der oberen Schicht den herzustellenden LSP herstellt.

14. PCE nach Anspruch 13, wobei die Sendeeinheit ferner konfiguriert ist, um: bevor die Empfangseinheit die Pfadherstellungsnachricht von dem PCE der oberen Schicht empfängt, die erste Verbindungsinformation an das PCE der oberen Schicht zu senden, wobei die erste Verbindungsinformation eine Planungsinformation eines geplanten Pfads der unteren Schicht in einem Netzwerk umfasst, auf dem sich dieses PCE befindet, wobei der geplante Pfad der unteren Schicht umfasst: den hergestellten Pfad der unteren Schicht und einen Pfad der unteren Schicht, der geplant, aber noch nicht hergestellt wurde; und
die Planungsinformation mindestens eine Kennung des geplanten Pfads der unteren Schicht, eine Kennung eines ersten Knotens des Pfads der unteren Schicht, eine Kennung eines letzten Knotens des Pfads der unteren Schicht und die Bandbreiteninformation des Pfads der unteren Schicht umfasst.

15. PCE nach Anspruch 14, wobei die Planungsinformation ferner umfasst: eine Statusinformation des Pfads der unteren Schicht, wobei die Statusinformation des Pfads der unteren Schicht verwendet wird, um anzugeben, dass der Pfad der unteren Schicht hergestellt wurde oder der Pfad der unteren Schicht geplant, aber noch nicht hergestellt wurde.

## Revendications

1. Procédé d'établissement de trajet inter-couches consistant :
à déterminer (S101), au moyen d'un élément de calcul de trajet (PCE) de couche supérieure, des informations de trajet de couche supérieure d'un trajet à commutation d'étiquette (LSP) à établir, un identifiant d'un premier noeud d'un trajet de couche inférieure et un identifiant d'un dernier noeud du trajet de couche inférieure en fonction d'un identifiant d'un premier noeud de couche supérieure, d'un identifiant d'un dernier noeud de couche supérieure et d'une exigence de largeur de bande du trajet LSP à établir, dans lequel les informations de trajet de couche supérieure comportent un identifiant d'un noeud de couche supérieure à travers lequel passe le trajet LSP à établir, et le trajet de couche inférieure est utilisé comme trajet de couche de fond du trajet LSP à établir pour transporter des données de service de couche supérieure ;
à acquérir (S102) un identifiant d'un trajet de couche inférieure établi qui met en correspondance l'identifiant du premier noeud du trajet de couche inférieure, l'identifiant du dernier noeud du trajet de couche inférieure et l'exigence de largeur de bande ; et
à envoyer (S103), au premier noeud de couche supérieure, une indication d'établissement de trajet qui comporte les informations de trajet de couche supérieure et l'identifiant du trajet de couche inférieure de telle sorte que le premier noeud de couche supérieure établisse le trajet LSP à établir en fonction des informations de trajet de couche supérieure et de l'identifiant du trajet de couche inférieure.

2. Procédé selon la revendication 1, dans lequel l'acquisition d'un identifiant d'un trajet de couche inférieure établi qui met en correspondance l'identifiant du premier noeud du trajet de couche inférieure, l'identifiant du dernier noeud du trajet de couche inférieure et l'exigence de largeur de bande, consiste :
à envoyer un message d'établissement de trajet à un élément PCE de couche inférieure, dans lequel le message d'établissement de trajet comporte l'identifiant du premier noeud du trajet de couche inférieure, l'identifiant du dernier noeud du trajet de couche inférieure et l'exigences de largeur de bande ; et
à recevoir un message d'indication de trajet en provenance de l'élément PCE de couche inférieure, dans lequel le message d'indication de trajet comporte l'identifiant du trajet de couche inférieure établi qui met en correspondance l'identifiant du premier noeud du trajet de couche inférieure, l'identifiant du dernier noeud du trajet de couche inférieure et l'exigences de largeur de bande.

3. Procédé selon la revendication 1, dans lequel, avant l'acquisition d'un identifiant d'un trajet de couche inférieure établi qui met en correspondance l'identifiant du premier noeud du trajet de couche inférieure, l'identifiant du dernier noeud du trajet de couche inférieure et l'exigence de largeur de bande, le procédé consiste en outre :
à recevoir des premières informations de connexion en provenance d'un élément PCE de couche inférieure, dans lequel les premières informations de connexion comportent des informations de planification d'un trajet de couche inférieure planifié sur un réseau sur lequel l'élément PCE de couche inférieure est situé, dans lequel le trajet de couche inférieure planifié comprend : le trajet de couche inférieure établi et un trajet de couche inférieure qui a été planifié mais qui n'a pas encore été établi ; et
les informations de planification comportent au moins l'identifiant du trajet de couche inférieure, l'identifiant du premier noeud du trajet de couche inférieure, l'identifiant du dernier noeud du trajet de couche inférieure et des informations de largeur de bande du trajet de couche inférieure.

4. Procédé selon la revendication 3, dans lequel l'acquisition d'un identifiant d'un trajet de couche inférieure établi qui met en correspondance l'identifiant du premier noeud du trajet de couche inférieure, l'identifiant du dernier noeud du trajet de couche inférieure et l'exigence de largeur de bande, consiste :
à acquérir un identifiant, qui se trouve dans les premières informations de connexion, d'un trajet de couche inférieure qui met en correspondance l'identifiant du premier noeud du trajet de couche inférieure, l'identifiant du dernier noeud du trajet de couche inférieure et l'exigence de largeur de bande ;
à envoyer un message d'établissement de trajet à l'élément PCE de couche inférieure, dans lequel le message d'établissement de trajet comporte l'identifiant acquis du trajet de couche inférieure ; et
à recevoir un message d'indication de trajet en provenance de l'élément PCE de couche inférieure, dans lequel le message d'indication de trajet comporte un identifiant d'un trajet de couche inférieure établi qui met en correspondance l'identifiant acquis du trajet de couche inférieure

5. Procédé d'établissement de trajet inter-couches consistant :
à recevoir (S301), au moyen d'un élément de calcul de trajet (PCE) de couche inférieure, un message d'établissement de trajet en provenance d'un élément PCE de couche supérieure, dans lequel le message d'établissement de trajet est utilisé pour donner comme instruction (S303) à un premier noeud de couche inférieure d'établir un trajet de couche inférieure qui est utilisé comme trajet de couche de fond d'un trajet à commutation d'étiquette (LSP) à établir pour transporter des données de service de couche supérieure ; et le message d'établissement de trajet comporte : un identifiant du trajet de couche inférieure ; et
si un trajet de couche inférieure qui met en correspondance l'identifiant, qui se trouve dans le message d'établissement de trajet, du trajet de couche inférieure a été établi (S302), à envoyer (S304), à l'élément PCE de couche supérieure, un message d'indication de trajet qui comprend un identifiant du trajet de couche inférieure établi de telle sorte que l'élément PCE de couche supérieure envoie, à un premier noeud de couche supérieure, une indication d'établissement de trajet qui comprend l'identifiant qui se trouve dans le message d'indication de trajet, du trajet de couche inférieure établi et que le premier noeud de couche supérieure établisse le trajet LSP à établir ; ou
si un trajet de couche inférieure qui met en correspondance l'identifiant, qui se trouve dans le message d'établissement de trajet, du trajet de couche inférieure n'a pas été établi, à établir le trajet de couche inférieure qui met en correspondance l'identifiant du trajet de couche inférieure et à envoyer, à l'élément PCE de couche supérieure, un message d'indication de trajet qui comprend un identifiant du trajet de couche inférieure établi de telle sorte que l'élément PCE de couche supérieure envoie, à un premier noeud de couche supérieure, une indication d'établissement de trajet qui comprend l'identifiant qui se trouve dans le message d'indication de trajet, du trajet de couche inférieure établi et que le premier noeud de couche supérieure établisse le trajet LSP à établir.

6. Procédé selon la revendication 5, dans lequel, avant la réception, par un élément PCE de couche inférieure, d'un message d'établissement de trajet en provenance d'un élément PCE de couche supérieure, le procédé consiste en outre :
à envoyer des premières informations de connexion à l'élément PCE de couche supérieure, dans lequel les premières informations de connexion comportent des informations de planification d'un trajet de couche inférieure planifié sur un réseau sur lequel l'élément PCE de couche inférieure est situé, dans lequel le trajet de couche inférieure planifié comprend : le trajet de couche inférieure établi et un trajet de couche inférieure qui a été planifié mais qui n'a pas encore été établi, dans lequel les informations de planification comportent au moins un identifiant du trajet de couche inférieure planifié, un identifiant d'un premier noeud du trajet de couche inférieure, un identifiant d'un dernier noeud du trajet de couche inférieure et des informations de largeur de bande du trajet de couche inférieure.

7. Procédé selon la revendication 6, dans lequel les informations de planification comportent en outre : des informations d'état du trajet de couche inférieure, dans lequel les informations d'état du trajet de couche inférieure sont utilisées pour indiquer que le trajet de couche inférieure a été établi ou que le trajet de couche inférieure a été planifié mais n'a pas encore été établi.

8. Procédé selon la revendication 7, dans lequel le procédé consiste en outre :
à envoyer des secondes informations de connexion à l'élément PCE de couche supérieure, dans lequel les secondes informations de connexion comportent au moins un identifiant d'un trajet de couche inférieure dont les informations d'état changent, et des informations de mise à jour d'état du trajet de couche inférieure dont les informations d'état changent, dans lequel les informations de mise à jour d'état sont utilisées pour mettre à jour, au moyen de l'élément PCE de couche supérieure en fonction de l'identifiant du trajet de couche inférieure dont les informations d'état changent, les informations d'état du trajet de couche inférieure dont les informations d'état changent.

9. Élément de calcul de trajet (PCE) comprenant :
une unité de détermination (51), configurée pour déterminer des informations de trajet de couche supérieure d'un trajet à commutation d'étiquette (LSP) à établir, un identifiant d'un premier noeud d'un trajet de couche inférieure et un identifiant d'un dernier noeud du trajet de couche inférieure en fonction d'un identifiant d'un premier noeud de couche supérieure, d'un identifiant d'un dernier noeud de couche supérieure et d'une exigence de largeur de bande du trajet LSP à établir, dans lequel les informations de trajet de couche supérieure comportent un identifiant d'un noeud de couche supérieure à travers lequel passe le trajet LSP à établir, et le trajet de couche inférieure est utilisé comme trajet de couche de fond du trajet LSP à établir pour transporter des données de service de couche supérieure ;
une unité d'acquisition (52), configurée pour acquérir un identifiant d'un trajet de couche inférieure établi qui met en correspondance l'identifiant du premier noeud du trajet de couche inférieure et l'identifiant du dernier noeud du trajet de couche inférieure qui sont déterminés par l'unité de détermination, et l'exigence de largeur de bande ; et
une unité d'envoi (53), configurée pour envoyer, au premier noeud de couche supérieure, une indication d'établissement de trajet qui comporte les informations de trajet de couche supérieure et l'identifiant du trajet de couche inférieure qui sont acquises par l'unité d'acquisition, de telle sorte que le premier noeud de couche supérieure établisse le trajet LSP à établir en fonction des informations de trajet de couche supérieure et de l'identifiant du trajet de couche inférieure.

10. Élément PCE selon la revendication 9, dans lequel l'unité d'acquisition (52) comprend :
une première sous-unité d'envoi (521), configurée pour envoyer un message d'établissement de trajet à un élément PCE de couche inférieure, dans lequel le message d'établissement de trajet comporte l'identifiant du premier noeud du trajet de couche inférieure et l'identifiant du dernier noeud du trajet de couche inférieure qui sont déterminés par l'unité de détermination, et l'exigences de largeur de bande ; et
une première sous-unité de réception (522), configurée pour recevoir un message d'indication de trajet en provenance de l'élément PCE de couche inférieure, dans lequel le message d'indication de trajet comporte l'identifiant du trajet de couche inférieure établi qui met en correspondance l'identifiant du premier noeud du trajet de couche inférieure, l'identifiant du dernier noeud du trajet de couche inférieure et l'exigences de largeur de bande qui se trouvent dans le message d'établissement de trajet envoyé par la première sous-unité d'envoi.

11. Élément PCE selon la revendication 9, dans lequel l' élément PCE comprend en outre :
une unité de réception (54), configurée : avant que l'unité d'acquisition n'acquière l'identifiant du trajet de couche inférieure établi qui met en correspondance l'identifiant du premier noeud du trajet de couche inférieure, l'identifiant du dernier noeud du trajet de couche inférieure et l'exigence de largeur de bande, pour recevoir des premières informations de connexion en provenance d'un élément PCE de couche inférieure, dans lequel les premières informations de connexion comportent des informations de planification d'un trajet de couche inférieure planifié sur un réseau sur lequel l'élément PCE de couche inférieure est situé, dans lequel le trajet de couche inférieure planifié comprend : le trajet de couche inférieure établi et un trajet de couche inférieure qui a été planifié mais qui n'a pas encore été établi ; et
les informations de planification comportent au moins l'identifiant du trajet de couche inférieure, l'identifiant du premier noeud du trajet de couche inférieure, l'identifiant du dernier noeud du trajet de couche inférieure et des informations de largeur de bande du trajet de couche inférieure.

12. Élément PCE selon la revendication 11, dans lequel l'unité d'acquisition (52) comprend :
une première sous-unité d'acquisition (523), configurée pour acquérir un identifiant, qui se trouve dans les premières informations de connexion reçues par l'unité de réception, d'un trajet de couche inférieure qui met en correspondance l'identifiant du premier noeud du trajet de couche inférieure, l'identifiant du dernier noeud du trajet de couche inférieure et l'exigence de largeur de bande ;
une seconde sous-unité d'envoi (521), configurée pour envoyer un message d'établissement de trajet à l'élément PCE de couche inférieure, dans lequel le message d'établissement de trajet comporte l'identifiant, qui est acquis par. La première sous-unité d'acquisition, du trajet de couche inférieure ; et
une seconde sous-unité de réception (522), configurée pour recevoir un message d'indication de trajet en provenance de l'élément PCE de couche inférieure, dans lequel le message d'indication de trajet comporte un identifiant d'un trajet de couche inférieure établi qui correspond à l'identifiant qui est acquis par la première sous-unité d'acquisition, du trajet de couche inférieure.

13. Élément de calcul de trajet (PCE) comprenant :
une unité de réception (61), configurée pour recevoir un message d'établissement de trajet en provenance d'un élément PCE de couche supérieure, dans lequel le message d'établissement de trajet est utilisé pour donner comme instruction à un premier noeud de couche inférieure d'établir un trajet de couche inférieure qui est utilisé comme trajet de couche de fond d'un trajet à commutation d'étiquette (LSP) à établir pour transporter des données de service de couche supérieure ; et le message d'établissement de trajet comporte : un identifiant du trajet de couche inférieure ;
une unité d'établissement (62), configurée : si un trajet de couche inférieure qui met en correspondance l'identifiant, qui se trouve dans le message d'établissement de trajet reçu par l'unité de réception, du trajet de couche inférieure n'a pas été établi, pour établir le trajet de couche inférieure qui met en correspondance l'identifiant du trajet de couche inférieure ; et
une unité d'envoi (63), configurée pour envoyer, à l'élément PCE de couche supérieure, un message d'indication de trajet qui comprend un identifiant du trajet de couche inférieure établi par l'unité d'établissement ; ou si un trajet de couche inférieure qui met en correspondance l'identifiant, qui se trouve dans le message d'établissement de trajet reçu par l'unité de réception, du trajet de couche inférieure a été établi, pour envoyer, à l'élément PCE de couche supérieure, un message d'indication de trajet qui comprend un identifiant du trajet de couche inférieure établi de telle sorte que l'élément PCE de couche supérieure envoie, à un premier noeud de couche supérieure, une indication d'établissement de trajet qui comprend l'identifiant qui se trouve dans le message d'indication de trajet, du trajet de couche inférieure établi et que le premier noeud de couche supérieure établisse le trajet LSP à établir.

14. Élément PCE selon la revendication 13, dans lequel l'unité d'envoi est en outre configurée : avant que l'unité de réception ne reçoive le message d'établissement de trajet en provenance de l'élément PCE de couche supérieure, pour envoyer des premières informations de connexion à l'élément PCE de couche supérieure, dans lequel les premières informations de connexion comportent des informations de planification d'un trajet de couche inférieure planifié sur un réseau sur lequel cet élément PCE est situé, dans lequel le trajet de couche inférieure planifié comprend : le trajet de couche inférieure établi et un trajet de couche inférieure qui a été planifié mais qui n'a pas encore été établi ; et
les informations de planification comportent au moins un identifiant du trajet de couche inférieure planifié, un identifiant d'un premier noeud du trajet de couche inférieure, un identifiant d'un dernier noeud du trajet de couche inférieure et des informations de largeur de bande du trajet de couche inférieure.

15. Élément PCE selon la revendication 14, dans lequel les informations de planification comportent en outre : des informations d'état du trajet de couche inférieure, dans lequel les informations d'état du trajet de couche inférieure sont utilisées pour indiquer que le trajet de couche inférieure a été établi ou que le trajet de couche inférieure a été planifié mais n'a pas encore été établi.
